# EUROPEAN PATENT APPLICATION

(11) **EP 4 586 063 A1**
(43) Date of publication of application: **16.07.2025**
(21) Application number: 23954569.2
(22) Date of filing: 14.11.2023
(51) Int. Cl.: G06F 3/044

(54) **TOUCH DISPLAY PANEL AND DISPLAY DEVICE**

(71) Applicant: BOE TECHNOLOGY GROUP CO., LTD., Beijing 100015 (CN); Beijing BOE Technology Development Co., Ltd., Beijing 100176 (CN)
(72) Inventor: LI, Chunyan, Beijing 100176 (CN); HAO, Xueguang, Beijing 100176 (CN); QIAO, Yong, Beijing 100176 (CN)
(74) Representative: Cohausz & Florack
(86) International application number: PCT/CN2023/131549
(87) International publication number: WO 2025/102241

(57) **Abstract**

Disclosed are a touch display panel and a display apparatus. The touch display panel includes: a base substrate including a touch region and a peripheral region surrounding the touch region; a plurality of touch electrodes, located in the touch region and disposed on one side of the base substrate; and a plurality of touch signal lines disposed on the same one side of the base substrate as the plurality of touch electrodes. The plurality of touch signal lines are electrically connected with the plurality of touch electrodes, the plurality of touch signal lines includes first portions on one side of the touch region in a first direction, at least some of the plurality of touch signal lines include second portions in the touch region and electrically connected with the first portions, and the second portions and the plurality of touch electrodes are disposed in different layers. The touch display panel includes a plurality of touch conductive layers, including: a first touch conductive layer including a part of the plurality of touch electrodes; a second touch conductive layer on one side of the first touch conductive layer facing away from the base substrate, including remaining parts of the plurality of touch electrodes; and a third touch conductive layer, located between the first touch conductive layer and the base substrate, or disposed on one side of the second touch conductive layer facing away from the base substrate. The third touch conductive layer includes the second portions.

## Description

### Technical Field

The disclosure relates to the field of display technology, in particular to a touch display panel and a display apparatus.

### Background

The existing touch display products adopt Flexible Multi Layer On Cell (FMLOC) technology. That is, the touch structure layer is arranged directly on the stacked light-emitting structure layer and packaging layer, which can well realize the lightness and thinness of the product.

The FMLOC touch structure includes touch electrodes and touch lines on the packaging layer of the display panel, the touch electrodes being arranged in the display region and the touch lines being arranged in the peripheral region outside the display region. Since the touch lines occupy the region of the peripheral region, the effect of narrow bezels that can be achieved is limited, even if the size of the touch line occupation is reduced.

### Summary

Embodiments of the disclosure provide a touch display panel. The touch display panel includes: a base substrate, including a touch region, and a peripheral region surrounding the touch region; a plurality of touch electrodes, located in the touch region and disposed on one side of the base substrate; and a plurality of touch signal lines disposed on the same one side of the base substrate as the plurality of touch electrodes. The plurality of touch signal lines are electrically connected with the plurality of touch electrodes, the plurality of touch signal lines includes first portions on one side of the touch region in a first direction, at least some of the plurality of touch signal lines comprise second portions in the touch region and electrically connected with the first portions, and the second portions and the plurality of touch electrodes are disposed in different layers. The touch display panel includes a plurality of touch conductive layers, including: a first touch conductive layer, including a part of the plurality of touch electrodes; a second touch conductive layer on one side of the first touch conductive layer facing away from the base substrate, including remaining parts of the plurality of touch electrodes; and a third touch conductive layer, located between the first touch conductive layer and the base substrate, or disposed on one side of the second touch conductive layer facing away from the base substrate. The third touch conductive layer includes the second portions.

In some embodiments, the plurality of touch electrodes includes: a plurality of first touch electrodes extending along a second direction and arranged along the first direction, where the first touch electrode comprises a plurality of first sub-electrodes arranged along the second direction, and the second direction intersects the first direction; and a plurality of second touch electrodes arranged along the second direction and extending along the first direction, where the second touch electrode incldues a plurality of second sub-electrodes arranged along the first direction and bridging electrodes for connecting adjacent two of the plurality of second sub-electrodes. The first touch conductive layer includes the bridging electrodes, and the second touch conductive layer incldues the plurality of the first sub-electrodes and the plurality of second sub-electrodes. The plurality of touch signal lines incldues: a plurality of first touch signal lines, where the first touch electrode is electrically connected with at least one first touch signal line, and the plurality of first touch signal lines includes the second portions; and a plurality of second touch signal lines, where the second touch electrode is electrically connected with at least one second touch signal line.

In some embodiments, the second portions of the plurality of first touch signal line include first sub-portions extending along the first direction and electrically connected with the first portions. At least some of the second portions of the plurality of first touch signal lines include second sub-portions extending along a second direction and electrically connected with the first sub-portions and the touch electrodes. An orthographic projection of the second sub-portion on the base substrate overlaps with an orthographic projection of the first touch electrode on the base substrate and an orthographic projection of the bridging electrode on the base substrate, and the orthographic projection of the second sub-portion on the base substrate does not overlap with an orthographic projection of the second sub-electrode on the base substrate.

In some embodiments, an orthographic projection of the first sub-portion on the base substrate overlaps with an orthographic projection of the first sub-electrode on the base substrate, and the orthographic projection of the first sub-portion on the base substrate does not overlap with an orthographic projection of the second touch electrode on the base substrate. The orthographic projection of the first sub-portion on the base substrate is within a region between orthographic projections of adjacent two of plurality of second touch electrodes on the base substrate.

In some embodiments, an orthographic projection of the first sub-portion on the base substrate overlaps with an orthographic projection of the first sub-electrode on the base substrate. Orthographic projections of at least some of the first sub-portions on the base substrate overlap with the orthographic projections of the second sub-electrodes on the base substrate. A total area of an overlapping region between the orthographic projection of the first sub-portion on the base substrate and the orthographic projection of the second sub-electrode on the base substrate is indicated as S1, an area of an orthographic projection of the first touch signal line on the base substrate is indicated as S2, and S1/S2 ≤ 10%. And/or, a total length, along the first direction, of the overlapping region between the orthographic projection of the first sub-portion on the base substrate and the orthographic projection of the second sub-electrode on the base substrate is indicated as L1, a length of the orthographic projection of the first touch signal line on the base substrate is indicated as L2, and L1/L2 ≤ 10%.

In some embodiments, the second touch conductive layer further includes a plurality of first dummy electrodes, and the plurality of first dummy electrodes are insulated from the plurality of touch electrodes.The first dummy electrode is located between first sub-electrodes of two different first touch electrodes that are adjacent, and the first dummy electrode is located between second sub-electrodes of two different second touch electrodes that are adjacent. Orthographic projections of at least some of the first sub-portions on the base substrate overlap with orthographic projections of the first dummy electrodes on the base substrate.

In some embodiments, at least some of the second portions of the plurality of first touch signal lines include first width regions and second width regions arranged alternately. An orthographic projection of the first width region on the base substrate is within an orthographic projection of the first sub-electrode on the base substrate. An orthographic projection of at least some of the second width regions overlaps with the orthographic projection of the bridging electrode on the base substrate. The orthographic projection of at least some of the second width regions is within an orthographic projection of a region between two adjacent second sub-electrodes on the base substrate, or the orthographic projection of at least some of the second width regions overlaps with the orthographic projection of the second sub-electrode on the base substrate. A width of the first width region along a direction perpendicular to an extending direction of the first width region is larger than a width of the second width region along a direction perpendicular to an extending direction of the second width region.

In some embodiments, in the first sub-portion, the orthographic projection of the first width region on the base substrate is within the orthographic projection of the first sub-electrode on the base substrate; and the orthographic projection of the second width region on the base substrate is within the orthographic projection of the region between two adjacent second sub-electrodes on the base substrate, or the orthographic projection of the second width region on the base substrate overlaps with the orthographic projection of the second sub-electrode on the base substrate. In the second sub-portion, the orthographic projection of the first width region on the base substrate is within the orthographic projection of the first sub-electrode on the base substrate, and the orthographic projection of the second width region on the base substrate overlaps with the orthographic projection of the bridging electrode on the base substrate.

In some embodiments, in the touch region, a pattern of an orthographic projection of the touch signal line on the base substrate comprises a plurality of grids. A quantity of grids included in the second width region along the direction perpendicular to the extending direction of the second width region is less than a quantity of grids included in the first width region along the direction perpendicular to the extending direction of the first width region.

In some embodiments, a pattern of the second width region is a line.

In some embodiments, an end of the second sub-portion far away from the first sub-portion is electrically connected with an end of the first touch electrode.

In some embodiments, the plurality of the first touch signal lines are divided into n first touch signal line groups, where n is a positive integer. First touch signal lines in the first touch signal line group correspond one-to-one with the first touch electrodes. In each first touch signal line group, first sub-portions of multiple first touch signal lines are arranged along the second direction, and second sub-portions of the multiple first touch signal lines are arranged along the first direction.

In some embodiments, in a direction from the second sub-portion to the first sub-portion, lengths, in the first direction, of the first sub-portions in the first touch signal line group increase gradually. In a direction with an increasing distance from the first portion in the touch region, lengths, in the second direction, of the second sub-portions in the first touch signal line group increase gradually.

In some embodiments, except for a second portion that is electrically connected with a first touch electrode farthest from the first portion, at least one of a first sub-portion or a second sub-portion of a remaining second portion comprises a first compensation portion. The first compensation portion extends in a zigzag pattern. In two first touch signal lines of the first touch signal line group, a quantity of first compensation portions included in a first touch signal line electrically connected with a first touch electrode closer to the first portion is greater than a quantity of first compensation portions included in a first touch signal line electrically connected with a first touch electrode farther from the first portion. In two first touch signal lines of the first touch signal line group, a total length of the first compensation portions included in the first touch signal line electrically connected with the first touch electrode closer to the first portion is greater than a total length of the first compensation portions included in the first touch signal line electrically connected with the first touch electrode farther from the first portion. An orthographic projection of the first compensation portion on the base substrate is within an orthographic projection of the first sub-electrode on the base substrate.

In some embodiments, in a direction with an increasing distance from the first portion in the touch region, line widths, in a direction perpendicular to an extending direction of the second portions, of the second portions in the first touch signal line group gradually increase.

In some embodiments, at least some of the second portions of the plurality of first touch signal lines comprise at least one second compensation portion. A width of the second compensation portion in a direction perpendicular to an extending direction of the second compensation portion is larger than a width of a remaining region of the second portion in a direction perpendicular to an extending direction of the remaining region. In two first touch signal lines of the first touch signal line group, a quantity of second compensation portions included in a first touch signal line electrically connected with a first touch electrode closer to the first portion is less than a quantity of second compensation portions included in a first touch signal line electrically connected with a first touch electrode farther from the first portion. An orthographic projection of the second compensation portion on the base substrate is within an orthographic projection of the first sub-electrode on the base substrate.

In some embodiments, widths of the second compensation portions in different first touch signal lines in the direction perpendicular to the extending direction of the second compensation portions are the same.

In some embodiments, in the two first touch signal lines of the first touch signal line group, a width of a second compensation portion in the first touch signal line electrically connected with the first touch electrode closer to the first portion in the direction perpendicular to the extending direction of the second compensation portion is smaller than a width of a second compensation portion in the first touch signal line electrically connected with the first touch electrode farther from the first portion in the direction perpendicular to the extending direction of the second compensation portion.

In some embodiments, the plurality of second touch signal lines are electrically connected one-to-one with the plurality of second touch electrodes, and the plurality of second touch signal lines include only the first portions.

In some embodiments, the plurality of second touch signal lines include a plurality of first type second touch signal lines and a plurality of second type second touch signal lines. The plurality of first type second touch signal lines include only the first portions, and the plurality of first type second touch signal lines are electrically connected one-to-one with the plurality of second touch electrodes. The plurality of second type second touch signal lines comprise the first portions and the second portions, and the plurality of second type second touch signal lines are electrically connected one-to-one with the plurality of second touch electrodes; and the second portions of the plurality of second type second touch signal lines are electrically connected with second sub-electrodes, farthest from the first portions, of the plurality of second touch electrodes.

In some embodiments, the plurality of first touch signal lines are divided into two first touch signal line groups, and the plurality of second type second touch signal lines are located between the two first touch signal line groups.

In some embodiments, the second portions of the plurality of second type second touch signal lines include third sub-portions extending along the first direction and electrically connected with the first portions. At least some of the second portions of the plurality of second type second touch signal lines further include fourth sub-portions extending along the second direction and electrically connected with the third sub-portions and the second touch electrodes. An orthographic projection of the fourth sub-portion on the base substrate overlaps with orthographic projections of the second sub-electrode and the first sub-electrode on the base substrate. An orthographic projection of the third sub-portion on the base substrate overlaps with the orthographic projections of the second sub-electrode and the bridging electrode on the base substrate, and the orthographic projection of the third sub-portion on the base substrate does not overlap with an orthographic projection of the second touch electrode on the base substrate.

In some embodiments, a total area of an overlapping region between an orthographic projection of the second portion of the second type second touch signal line on the base substrate and the orthographic projection of the first touch electrode on the base substrate is indicated as S3, an area of the orthographic projection of the second portion of the second type second touch signal line on the base substrate is indicated as S4, and S3/S4 ≤ 10%. And/or, a length, in the first direction, of the overlapping region between the orthographic projection of the second portion of the second type second touch signal line on the base substrate and the orthographic projection of the first touch electrode on the base substrate is indicated as L3, a length of the orthographic projection of the second portion of the second type second touch signal line on the base substrate is indicated as L4, and L3/L4 ≤ 10%.

In some embodiments, at least some of the second portions of the plurality of second type second touch signal lines include third width regions and fourth width regions arranged alternately. An orthographic projection of the third width region on the base substrate overlaps with the orthographic projection of the first sub-electrode on the base substrate, the orthographic projection of the third width region on the base substrate does not overlap with the orthographic projection of the second sub-electrode on the base substrate, and an orthographic projection of the fourth width region on the base substrate overlaps with the orthographic projection of the second sub-electrode on the base substrate. A width of the third width region in a direction perpendicular to an extending direction of the third width region is greater than a width of the fourth width region in a direction perpendicular to an extending direction of the fourth width region. In the touch region, a pattern of an orthographic projection of the touch signal line on the base substrate incldues a plurality of grids, and a quantity of grids included in the fourth width region in the direction perpendicular to the extending direction of the fourth width region is less than a quantity of grids included in the third width region in the direction perpendicular to the extending direction of the third width region; or a pattern of the orthographic projection of the third width region on the base substrate includes a plurality of grids, and a pattern of the orthographic projection of the fourth width region on the base substrate is a line.

In some embodiments, the third touch conductive layer further includes a first shielding signal line between the second portion of the first touch signal line and the second portion of the second type second touch signal line. The first shielding signal line includes a third portion extending from the touch region to the peripheral region in the first direction, and a fourth portion extending in the second direction and electrically connected with the third portion. In the second direction, the third portion is located between the first sub-portion and the third sub-portion; and in the first direction, the fourth portion is located between the second sub-portion and the fourth sub-portion.

In some embodiments, the third touch conductive layer further includes a plurality of second dummy electrodes. The plurality second dummy electrodes are spaced apart from and insulated from the second portions.

In some embodiments, the third touch conductive layer is disposed between the base substrate and the first touch conductive layer, and the first touch conductive layer further includes a plurality of first connection electrodes electrically connected with the second portions. An orthographic projection of the first connection electrode on the base substrate overlaps with an orthographic projection of a first sub-electrode on the base substrate, and the orthographic projection of the first connection electrode on the base substrate does not overlap with an orthographic projection of a second sub-electrode on the base substrate; or an orthographic projection of some of the first connection electrodes on the base substrate is within the orthographic projection of the first sub-electrode on the base substrate; and an orthographic projection of some of the first connections electrodes on the base substrate overlaps with both the orthographic projections of the first sub-electrode and the second sub-electrode on the base substrate.

In some embodiments, the first touch conductive layer further includes a third dummy electrode between the first connection electrode and the bridging electrode.

In some embodiments, the third touch conductive layer further includes a plurality of second connection electrodes and a plurality of third connection electrodes; the second connection electrode is electrically connected with the first touch electrode, and the third connection electrode is electrically connected with the second touch electrode.

In some embodiments, the touch display panel further includes a plurality of touch insulating layers. At least some of the plurality of touch insulating layers are disposed between adjacent two of the plurality of touch conductive layers. The third touch conductive layer is disposed at one side of the second touch conductive layer facing away from the base substrate, and a thickness of a touch insulating layer between the third touch conductive layer and the second touch conductive layer is larger than a thickness of a touch insulating layer between the first touch conductive layer and the second touch conductive layer.

In some embodiments, the first portion includes a plurality of layers of sub-signal lines arranged in a stack. The plurality of layers of sub-signal lines include a first sub-signal line, a second sub-signal line and a third sub-signal line sequentially disposed on one side of the base substrate. The first sub-signal line, the second sub-signal line, and the third sub-signal line are respectively disposed in three touch conductive layers.

In some embodiments, at least some of the first portions include fifth sub-portions extending in a second direction and sixth sub-portions extending in the first direction. The touch display panel further includes a first touch insulating layer between the first sub-signal line and the second sub-signal line, and a second touch insulating layer between the second sub-signal line and the third sub-signal line. At least some region of the sixth sub-portion includes the first sub-signal line, the second sub-signal line and the third sub-signal line. In the sixth sub-portion, the second sub-signal line is electrically connected with the first sub-signal line through a first via passing through the first touch insulating layer, and the third sub-signal line is electrically connected with the second sub-signal line through a second via passing through the second touch insulating layer. An orthographic projection of the first via on the base substrate does not overlap with an orthographic projection of the second via on the base substrate.

In some embodiments, the fifth sub-portion includes one of the first sub-signal line, the second sub-signal line or the third sub-signal line; orthographic projections of fifth sub-portions in different layers on the base substrate overlap with each other.

In some embodiments, the touch display panel further includes a dam in the peripheral region. An orthographic projection of the first portion on the base substrate overlaps with an orthographic projection of the dam on the base substrate, and in an overlapping region between the orthographic projection of the first portion on the base substrate and the orthographic projection of the dam on the base substrate, the first portion comprises one layer or two layers of sub-signal lines.

In some embodiments, the peripheral region includes a first peripheral region at one side of the touch region along the first direction, and the first portions are located in the first peripheral region. The first peripheral region includes a bending region extending along a second direction. An orthographic projection of the first portions on the base substrate overlaps with the bending region, and in the bending region, the first portion comprises one layer of sub-signal lines. A plurality of layers of sub-signal lines further includes a fourth sub-signal line between a first sub-signal line and the base substrate. An orthographic projection of the fourth sub-signal line on the base substrate passes through the bending region, and orthographic projections of the first sub-signal line, a second sub-signal line and a third sub-signal line on the base substrate do not overlap with the bending region. In a region except the bending region, the fourth sub-signal line is electrically connected with one of the first sub-signal line, the second sub-signal line or the third sub-signal line.

In some embodiments, the touch display panel further includes a plurality of light-emitting units located in the touch region and disposed between the base substrate and the plurality of touch conductive layers. In the touch region, patterns of orthographic projections of the first touch conductive layer, the second touch conductive layer and the third touch conductive layer on the base substrate include a plurality of grids. Each grid corresponds to at least one light-emitting unit, and an orthographic projection of a light-emitting region of the light-emitting unit on the base substrate is within an orthographic projection of the grid on the base substrate.

In some embodiments, the touch display panel further includes a plurality of light extraction structures, where the light extraction structure includes a first sub-structure and a second sub-structure on one side of the first sub-structure facing away from the base substrate. The first sub-structure includes an opening, and an orthographic projection of the opening on the base substrate covers the orthographic projection of the light-emitting region on the base substrate. At the opening, the first sub-structure includes an inclined sidewall, and the second sub-structure covers the opening and the inclined sidewall. A refractive index of the first sub-structure is less than a refractive index of the second sub-structure. The touch display panel further includes a plurality of touch insulating layers. Some of the plurality of touch insulating layers are disposed between adjacent two of the plurality of touch conductive layers; and some of the plurality of touch insulating layers are disposed on one side, facing away from the base substrate, of a touch conductive layer farthest from the base substrate, and/or some of the plurality of touch insulating layers are disposed between a touch conductive layer closest to the base substrate and the base substrate. Among the plurality of touch insulating layers, at least one touch insulating layer comprises the first sub-structure, and a touch insulating layer adjacent to the at least one touch insulating layer and disposed on one side of the at least one touch insulating layer facing away from the base substrate comprises the second sub-structure.

In some embodiments, the plurality of touch insulating layers include a first touch insulating layer, a second touch insulating layer, a third touch insulating layer and a fourth touch insulating layer. The third touch insulating layer is disposed on the side, facing away from the base substrate, of the touch conductive layer farthest from the base substrate, and the fourth touch conductive layer is disposed on one side of the third touch insulating layer facing away from the base substrate. The first touch conductive layer includes a plurality of first openings in the touch region, an orthographic projection of the first opening on the base substrate covers the orthographic projection of the light-emitting region on the base substrate, and the orthographic projection of the first opening on the base substrate does not overlap with orthographic projections of the touch signal line and the touch electrode on the base substrate. At the first opening, the first touch insulating layer includes a first inclined sidewall, and the second touch insulating layer covers the first inclined sidewall and the first opening. A refractive index of the second touch insulating layer is larger than a refractive index of the first touch insulating layer. The third touch insulating layer includes a plurality of second openings in the touch region, an orthographic projection of the second opening on the base substrate covers the orthographic projection of the light-emitting region on the base substrate, and the orthographic projection of the second opening on the base substrate does not overlap with the orthographic projections of the touch signal line and the touch electrode on the base substrate. At the second opening, the third touch insulating layer includes a second inclined sidewall, and the fourth touch insulating layer covers the second inclined sidewall and the second opening. A refractive index of the fourth touch insulating layer is larger than a refractive index of the third touch insulating layer.

In some embodiments, the touch display panel further includes: a plurality of antenna electrodes in the touch region, and an antenna signal line electrically connected with the plurality of antenna electrodes. The plurality of antenna electrodes are located at an edge, far away from the first portions, of the touch region. The antenna signal line includes a fifth portion in the peripheral region and a sixth portion in the touch region. An orthographic projection of the sixth portion on the base substrate overlaps with an edge of the touch region. The plurality of antenna electrodes and the antenna signal line are disposed in the third touch conductive layer. The plurality of antenna electrodes are disposed in the second touch conductive layer, and the antenna signal line is disposed in the third touch conductive layer. The second touch conductive layer further includes a fourth dummy electrode between the touch electrode and the antenna electrode.

In some embodiments, the touch display panel further includes: a plurality of pressure sensors in the touch region, and a plurality of pressure-sensitive signal lines. The pressure sensor incldues a first electrode, a second electrode in a different layer from the first electrode, and a pressure-sensitive layer between the first electrode and the second electrode. The pressure-sensitive signal line includes a first pressure-sensitive signal line electrically connected with the first electrode, and a second pressure-sensitive signal line electrically connected with the second electrode. At least two of the first touch conductive layer, the second touch conductive layer or the third touch conductive layer include the first electrode, the second electrode and the pressure-sensitive signal line.

In some embodiments, the touch display panel further includes a plurality of touch insulating layers. At least some of the plurality of touch insulating layers are located between adjacent two of the plurality of touch conductive layers. In the touch region, the first pressure-sensitive signal line is disposed in the first touch conductive layer, the first electrode is disposed in the second touch conductive layer, and the second electrode and the second pressure-sensitive signal line are disposed in the third touch conductive layer; and a touch insulating layer between the second touch conductive layer and the third touch conductive layer comprises the pressure-sensitive layer. Or, in the touch region, the first pressure-sensitive signal line and the first electrode are disposed in the first touch conductive layer, the second electrode is disposed in the second touch conductive layer, and the second pressure-sensitive signal line is disposed in the third touch conductive layer; and a touch insulating layer between the second touch conductive layer and the first touch conductive layer comprises the pressure-sensitive layer. Or, in the touch region, the first pressure-sensitive signal line and the first electrode are disposed in the first touch conductive layer, and the second electrode and the second pressure-sensitive signal line are disposed in the third touch conductive layer; and a touch insulating layer between the third touch conductive layer and the first touch conductive layer comprises the pressure-sensitive layer.

In some embodiments, centers of orthographic projections of at least some of the first electrodes and at least some of the second electrodes on the base substrate coincide with centers of orthographic projections of first sub-electrodes or second sub-electrodes on the base substrate. Or, orthographic projections of the first electrode and the second electrode are within an orthographic projection of a region between adjacent touch electrodes on the base substrate.

Embodiments of the disclosure provide a display apparatus, including the touch display panel according to the embodiments of the disclosure.

### Brief Description of Figures

In order to set forth technical solutions in embodiments of the disclosure more clearly, accompanying drawings used for description of the embodiments will be briefly introduced below. Obviously, the drawings in the following description are only some of embodiments of the disclosure. Those ordinarily skilled in the art can obtain other drawings according to these drawings without creative work.
FIG. 1 is a structural schematic diagram of a touch display panel in the related art.
FIG. 2 is a structural schematic diagram of a touch display panel according to embodiments of the disclosure.
FIG. 3 is a cross-sectional view along line AA' in FIG. 2 according to embodiments of the disclosure.
FIG. 4 is another cross-sectional view along line AA' in FIG. 2 according to embodiments of the disclosure.
FIG. 5 is an enlarged view of region E in FIG. 2 according to embodiments of the disclosure.
FIG. 6 is another structural schematic diagram of a touch display panel according to embodiments of the disclosure.
FIG. 7 is another structural schematic diagram of a touch display panel according to embodiments of the disclosure.
FIG. 8 is another structural schematic diagram of a touch display panel according to embodiments of the disclosure.
FIG. 9 is an enlarged view of region C in FIG. 2 according to embodiments of the disclosure.
FIG. 10 is another enlarged view of region C in FIG. 2 according to embodiments of the disclosure.
FIG. 11 is a cross-sectional view along line FF' in FIG. 2 according to embodiments of the disclosure.
FIG. 12 is a cross-sectional view along line HH' in FIG. 2 according to embodiments of the disclosure.
FIG. 13 is another structural schematic diagram of a touch display panel according to embodiments of the disclosure.
FIG. 14 is an enlarged view of region J in FIG. 13 according to embodiments of the disclosure.
FIG. 15 is another enlarged view of region J in FIG. 13 according to embodiments of the disclosure.
FIG. 16 is a cross-sectional view along line BB' in FIG. 2 according to embodiments of the disclosure.
FIG. 17 is another structural schematic diagram of a touch display panel according to embodiments of the disclosure.
FIG. 18 is another structural schematic diagram of a touch display panel according to embodiments of the disclosure.
FIG. 19 is another structural schematic diagram of a touch display panel according to embodiments of the disclosure.
FIG. 20 is another structural schematic diagram of a touch display panel according to embodiments of the disclosure.
FIG. 21 is another structural schematic diagram of a touch display panel according to embodiments of the disclosure.
FIG. 22 is another structural schematic diagram of a touch display panel according to embodiments of the disclosure.
FIG. 23 is another structural schematic diagram of a touch display panel according to embodiments of the disclosure.
FIG. 24 is another structural schematic diagram of a touch display panel according to embodiments of the disclosure.
FIG. 25 is another structural schematic diagram of a touch display panel according to embodiments of the disclosure.
FIG. 26 is another structural schematic diagram of a touch display panel according to embodiments of the disclosure.
FIG. 27 is a cross-sectional view along line KK' in FIG. 26 according to embodiments of the disclosure.
FIG. 28 is another cross-sectional view along line KK' in FIG. 26 according to embodiments of the disclosure.
FIG. 29 is another structural schematic diagram of a touch display panel according to embodiments of the disclosure.
FIG. 30 is a cross-sectional view along line MM' in FIG. 29 according to embodiments of the disclosure.
FIG. 31 is an enlarged view of region N in FIG. 29 according to embodiments of the disclosure.
FIG. 32 is a cross-sectional view along line PP' in FIG. 31 according to embodiments of the disclosure.
FIG. 33 is another structural schematic diagram of a touch display panel according to embodiments of the disclosure.
FIG. 34 is an enlarged view of region O in FIG. 29 according to embodiments of the disclosure.
FIG. 35 is a cross-sectional view along line RR' in FIG. 31 according to embodiments of the disclosure.
FIG. 36 is another structural schematic diagram of a touch display panel according to embodiments of the disclosure.
FIG. 37 is an enlarged view of region T in FIG. 36 according to embodiments of the disclosure.
FIG. 38 is a cross-sectional view along line UU' in FIG. 37 according to embodiments of the disclosure.
FIG. 39 is another cross-sectional view along line UU' in FIG. 37 according to embodiments of the disclosure.
FIG. 40 is another cross-sectional view along line UU' in FIG. 37 according to embodiments of the disclosure.
FIG. 41 is another structural schematic diagram of a touch display panel according to embodiments of the disclosure.
FIG. 42 is another structural schematic diagram of a touch display panel according to embodiments of the disclosure.
FIG. 43 is another structural schematic diagram of a touch display panel according to embodiments of the disclosure.
FIG. 44 is another structural schematic diagram of a touch display panel according to embodiments of the disclosure.
FIG. 45 is another structural schematic diagram of a touch display panel according to embodiments of the disclosure.
FIG. 46 is another structural schematic diagram of a touch display panel according to embodiments of the disclosure.
FIG. 47 is another structural schematic diagram of a touch display panel according to embodiments of the disclosure.
FIG. 48 is another structural schematic diagram of a touch display panel according to embodiments of the disclosure.
FIG. 49 is a cross-sectional view along line QQ' in FIG. 48 according to embodiments of the disclosure.
FIG. 50 is another cross-sectional view along line QQ' in FIG. 48 according to embodiments of the disclosure.
FIG. 51 is another cross-sectional view along line QQ' in FIG. 48 according to embodiments of the disclosure.
FIG. 52 is another cross-sectional view along line QQ' in FIG. 48 according to embodiments of the disclosure.
FIG. 53 is another cross-sectional view along line QQ' in FIG. 48 according to embodiments of the disclosure.
FIG. 54 is another cross-sectional view along line QQ' in FIG. 48 according to embodiments of the disclosure.
FIG. 55 is another structural schematic diagram of a touch display panel according to embodiments of the disclosure.
FIG. 56 is a cross-sectional view along line ZZ' in FIG. 55 according to embodiments of the disclosure.
FIG. 57 is another cross-sectional view along line ZZ' in FIG. 55 according to embodiments of the disclosure.
FIG. 58 is another cross-sectional view along line ZZ' in FIG. 55 according to embodiments of the disclosure.
FIG. 59 is another cross-sectional view along line ZZ' in FIG. 55 according to embodiments of the disclosure.

### Detailed Description

In order to make the objectives, technical solutions, and advantages of embodiments of the disclosure clearer, the technical solution of the embodiments of the disclosure will be described clearly and comprehensively in conjunction with the accompanying drawings. Clearly, the described embodiments are part of embodiments of the disclosures but not all embodiments. In cases where there is no conflict, features of embodiments and the embodiments in the disclosure can be combined with each other. Based on the described embodiments of the disclosure, all other embodiments that ordinary skilled in the art can obtain without creative effort fall within the scope of protection of the disclosure.

Unless indicated otherwise, technical terms or scientific terms used in the disclosure should be understood in the general sense by those skilled in the art. Terms like "first," "second," and similar words do not imply any order, quantity, or importance but are used to distinguish different components. Terms like "including" or "comprising" indicate that an element or object listed before the term covers those listed after the term, and their equivalent, without excluding other elements or objects. Terms like "connected" or "coupled" are not limited to physical or mechanical connections but can include electrical connections, whether direct or indirect.

It should be noted that sizes and shapes of all figures in the drawings do not reflect a true scale and are only intended to illustrate the contents of the disclosure. Same or similar reference signs indicate same or similar elements or elements with the same or similar function throughout the disclosure.

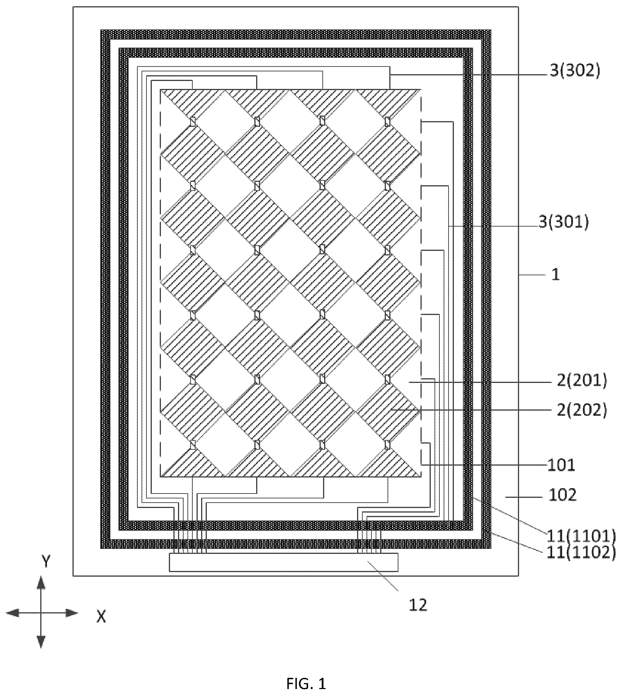

In the related art, as shown in FIG. 1, touch electrodes 2 are located in a touch region 101. Touch signal lines 3 electrically connected with the touch electrodes 2 extending along a second direction X start from a peripheral region 102 at the right side and extend to the peripheral region 102 below the touch region 101. Touch signal lines 3 electrically connected with the touch electrodes 2 extending along a first direction Y start from the peripheral region 102 above the touch region 101, pass through the peripheral region 102 at the left side of the touch region 101 and extend to the peripheral region 102 below the touch region 101. As such, all the peripheral region 102 above and at both left and right sides of the touch region 101 are required for arranging the touch signal lines 3. The impact of the touch signal lines on the size of the peripheral region cannot be eliminated, even by reducing the line width and line spacing of the touch signal line to reduce the size of the touch line occupation, and the effect of narrow bezel is limited.

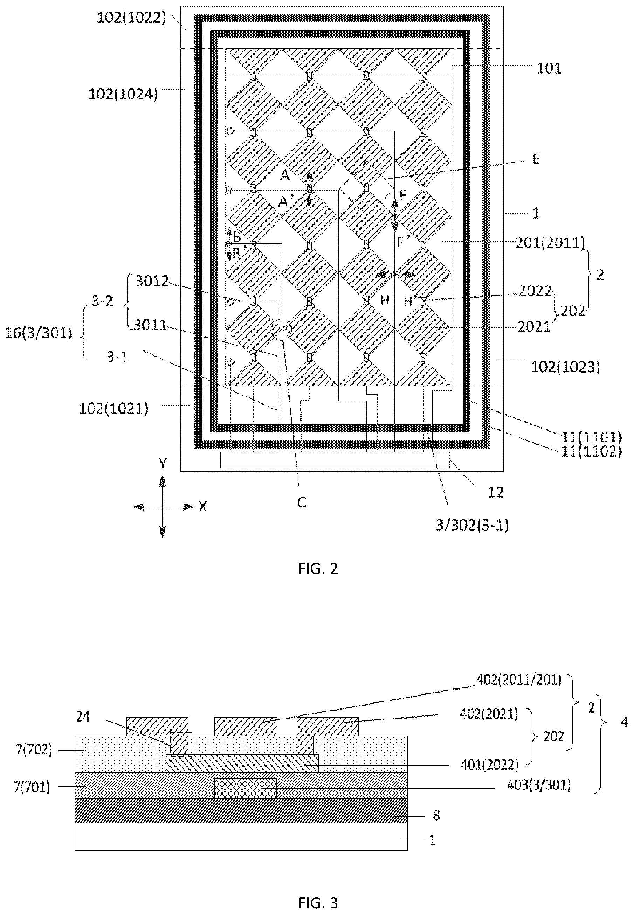

Embodiments of the disclosure provide a touch display panel, as shown in FIG. 2, the touch display panel includes a base substrate 1, a plurality of touch electrodes 2 on one side of the base substrate 1 and a plurality of touch signal lines 3 on the same side of the base substrate 1 as the plurality of touch electrodes 2.

The base substrate 1 includes a touch region 101, and a peripheral region 102 enclosing the touch region 101.

The plurality of touch electrodes 2 are located in the touch region 101.

The touch signal lines 3 are electrically connected with the touch electrodes 2. The touch signal lines 3 include first portions 3-1 at one side of the touch region 101 along a first direction Y. At least some of the touch signal lines 3 further include second portions 3-2 located in the touch region 101 and electrically connected with the first portions 3-1. The second portions 3-2 and the touch electrodes 2 are disposed in different layers.

In the touch display panel according to the embodiments of the disclosure, the second portions of some touch signal lines, except the first portions, are arranged in the touch region. That is, the second portions, other than the first portions, are not arranged in the peripheral region. The size of at least some of the peripheral region can be reduced, and the narrow bezel effect can be realized. Further, the second portions and the touch electrodes in the touch region are disposed in different layers, which can reduce the interference of the second portions to the touch electrodes, thereby avoiding the impact on the touch accuracy.

In some embodiments, as shown in FIG. 2, the peripheral region 2 includes a first peripheral region 1021 and a second peripheral region 1022 at both sides of the touch region 101 in the first direction Y, and a third peripheral region 1023 and a fourth peripheral region 1024 at both sides of the touch region 101 in the second direction X. As shown in FIG. 2, the first portions 3-1 are located in the first peripheral region 1021, and the second direction X intersects the first direction Y. The second direction X is perpendicular to the first direction Y in FIG. 2.

In a specific implementation, as shown in FIG. 2, the first peripheral region 1021 includes a bonding region 12, which includes multiple bonding electrodes. These bonding electrodes are bonded to the driving chip, and the first portions of the touch signal lines are electrically connected with the bonding electrodes, allowing the transmission of touch signals through the touch signal lines.

In some embodiments, as shown in FIG. 2, the touch signal line 3, orthographic projections of the touch signal lines on the substrate 1, do not overlap with the peripheral regions 102 located on both sides of the touch region 101 in the second direction X. Specifically, the orthographic projections of the touch signal lines 3 on the substrate 1 do not overlap with the fourth peripheral region 1024 and the third peripheral region 1023. Also, the orthographic projections of the touch signal lines 3 on the substrate 1 do not overlap with the second peripheral region 1022.

In the touch display panel provided in the disclosure, the orthographic projections of the touch signal lines on the substrate do not overlap with the fourth peripheral region, the second peripheral region, and the third peripheral region except the first peripheral region, which can completely eliminates the impact of the touch signal lines on sizes of the fourth, second, and third peripheral regions. Reducing the sizes of the fourth, second, and third peripheral regions can achieve the effect of an extremely narrow bezel.

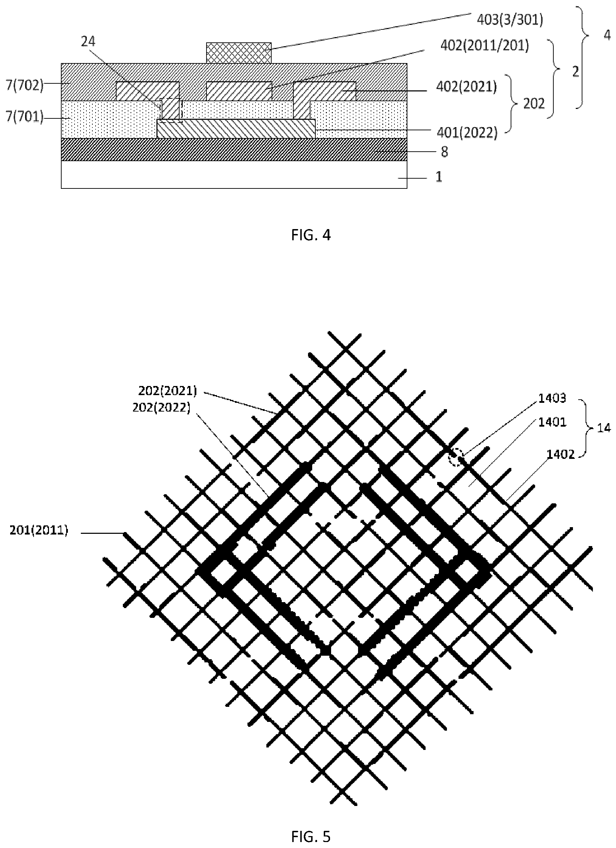

In some embodiments, as shown in FIGS. 3 and 4, the touch display panel includes multiple layers of touch conductive layers 4, including:
a first touch conductive layer 401, which includes a part of the plurality of touch electrodes 2;
a second touch conductive layer 402, on the side of the first touch conductive layer 401 away from the base substrate 1; where the second touch conductive layer 402 includes the remaining part of the plurality of touch electrodes 2;
a third touch conductive layer 403, between the first touch conductive layer 401 and the base substrate 1, or on the side of the second touch conductive layer 402 away from the base substrate 1; where the third touch conductive layer 403 includes the first portions 3-1.

It should be noted that FIG. 3 is a cross-sectional view along AA' in FIG. 2, where the third touch conductive layer 403 is between the first touch conductive layer 401 and the base substrate 1. FIG. 4 is another cross-sectional view along AA' in FIG. 2, where the third touch conductive layer 403 is on the side of the second touch conductive layer 402 away from the base substrate 1.

In some embodiments, as shown in FIGS. 3 and 4, the touch display panel further includes multiple layers of touch insulating layers 7. At least part of the touch insulating layers 7 is located between adjacent touch conductive layers 4.

The multiple layers of touch insulating layers 7 include: a first touch insulating layer 701, and a second touch insulating layer 702 on the side of the first touch insulating layer 701 away from the base substrate 1. In FIG. 3, the first touch insulating layer 701 is between the first touch conductive layer 401 and the third touch conductive layer 403, while the second touch insulating layer 702 is between the first touch conductive layer 401 and the second touch conductive layer 402. In FIG. 4, the first touch insulating layer 701 is between the first touch conductive layer 401 and the second touch conductive layer 402, while the second touch insulating layer 702 is between the third touch conductive layer 403 and the second touch conductive layer 402.

In some embodiments, as shown in FIGS. 2 to 4, the plurality of touch electrodes 2 include:
a plurality of first touch electrodes 201, extending in the second direction X and arranged in the first direction Y; where the first touch electrode 201 includes a plurality of first sub-electrodes 2011 arranged in the second direction X;
a plurality of second touch electrodes 202, arranged in the second direction X and extending in the first direction Y; where the second touch electrode 202 includes multiple second sub-electrodes 2021 arranged in the first direction Y, and bridging electrodes 2022 that electrically connect adjacent second sub-electrodes 2021.

The first touch conductive layer 401 includes the bridging electrodes 2022, and the second touch conductive layer 402 includes the first sub-electrodes 2011 and the second sub-electrodes 2021.

In some embodiments, as shown in FIGS. 3 and 4, the second sub-electrode 2021 is electrically connected with the bridging electrode 2022 through the third via 24 passing all the way through the touch insulating layer 7. In FIG. 3, the third via 24 passes all the way through the second touch insulating layer 702; in FIG. 4, the third via 24 passes all the way through the first touch insulating layer 701.

In some embodiments, as shown in FIGS. 2 to 4, the plurality of touch signal lines 3 include:
a plurality of first touch signal lines 301; where the first touch electrode 201 is electrically connected with at least one first touch signal line;
a plurality of second touch signal lines 302; where the second touch electrode 202 is electrically connected with at least one second touch signal line 302.

In the touch display panel provided in the disclosure, as shown in FIG. 3, the third touch conductive layer 403 is located between the first touch conductive layer 401 and the base substrate 1, increasing the distance between the second portion of the touch signal line in the touch region and the first sub-electrode and the second sub-electrode. This avoids electrical interference between the second portion of the first touch signal line and the second sub-electrode, or between the second portion of the second touch signal line and the sub-electrode, thus preventing the impact on touch accuracy.

In some embodiments, as shown in FIG. 4, when the third touch conductive layer 403 is on the side of the second touch conductive layer 402 away from the base substrate 1, the thickness of the touch insulating layer 7 between the third touch conductive layer 403 and the second touch conductive layer 402 is greater than the thickness of the touch insulating layer 7 between the first touch conductive layer 401 and the second touch conductive layer 402. By increasing the thickness of the touch insulating layer 7 between the first touch conductive layer 401 and the second touch conductive layer 402, the distance between the second portion of the touch signal line located in the touch region and the first sub-electrode and the second sub-electrode is increased. This avoids electrical interference between the second portion of the first touch signal line and the second sub-electrode, or between the second portion of the second touch signal line and the first sub-electrode, preventing an impact on touch accuracy.

In some embodiments, as shown in FIG. 5, the touch electrodes 2 and touch signal lines (not shown) located in the touch region 101 both include a metal mesh structure 14. In other words, the patterns of the orthographic projections of touch electrodes 2 and touch signal lines 3 on the base substrate 1 include grids 1401.

It should be noted that FIG. 5 is an enlarged view of region E in FIG. 2.

In a specific implementation, as shown in FIGS. 5, the metal mesh structure 14 is formed by a plurality of crossing metal lines 1402, so that the metal mesh structure 14 includes multiple grids 1401. The grid 1401 is a polygon formed by multiple metal lines. Alternatively, the metal mesh 1401 is formed by repetitively and continuously setting and splicing the grids 1401. As shown in FIG. 5, the shape of the grid 1401 formed by the metal lines 1402 can be rhombus. Alternatively, the shape of the grid formed by the metal lines can be triangular, rectangular, hexagonal, etc. Furthermore, the grids formed by the metal lines can be a combination of various shapes, such as a combination of pentagons and hexagons. Alternatively, the shapes of the grids formed by the metal lines can include any one or more of triangle, square, rectangle, rhombus, trapezoid, pentagon, and hexagon. In a specific implementation, the mesh pattern formed by the metal lines can be of regular shapes or irregular shapes. The edges of the grids can be straight lines or curves, which is not limited in the disclosure. On the edge of the metal mesh structure, a pattern of incomplete grid can be included.

In a specific implementation, as shown in FIG. 5, multiple breaks 1403 can be provided on the grids 1401. For those in a same touch conductive layer 4 and need to be insulated from each other, for example, when the grid 1401 of the first sub-electrode 2011 and the grid 1401 of the second sub-electrode 2021 are in the same layer, the breaks 1403 are provided in the pattern of the grids 1401 which is on the entire surface to achieve isolation between the grid 1401 of the first sub-electrode 2011 and the grid 1401 of the second sub-electrode 2021.

The touch electrodes and touch signal lines provided in the disclosure include a metal mesh structure. The first touch electrodes, the second touch electrodes, and the touch signal lines of the metal mesh structure have advantages such as low resistance, thin thickness, and fast response speed, which can improve the sensitivity and accuracy of touch recognition.

In a specific implementation, the shapes, sizes, and metal line widths of the grids 1401 in the first touch conductive layer, the second touch conductive layer, and the third touch conductive layer are consistent. The orthographic projections of the grids in the first touch conductive layer, the second touch conductive layer, and the third touch conductive layer on the base substrate has a substantially overlapping region.

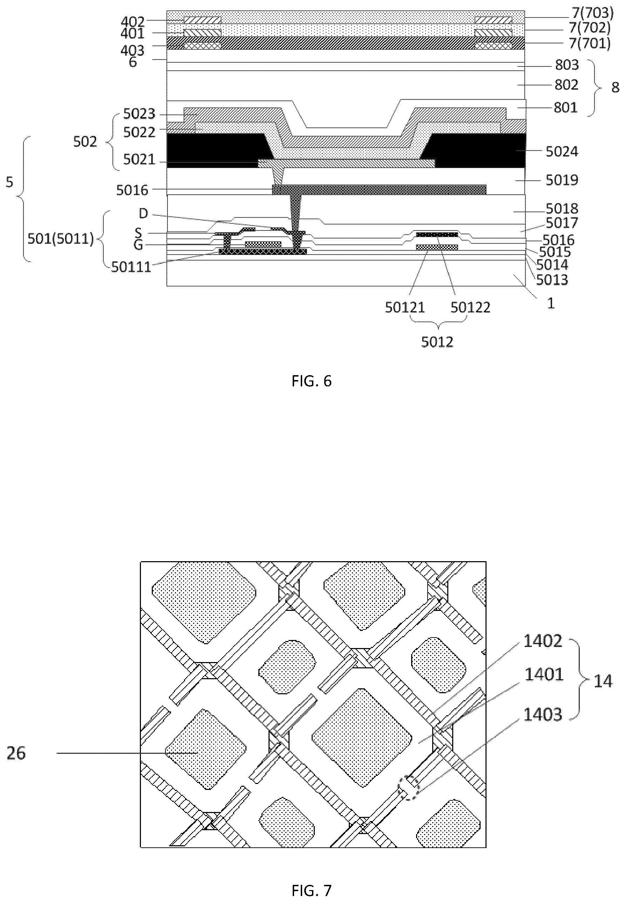

In some embodiments, as shown in FIG. 6, the touch display panel further includes: a display layer 5 between the base substrate 1 and the touch conductive layers 4; and an encapsulation layer 8 between the display layer 5 and the touch conductive layers 4.

In a specific implementation, the touch region 101 of the touch display panel is also the display region of the touch display panel.

In a specific implementation, as shown in FIGS. 3 and 4, the touch electrodes 2 and touch signal lines 3 are disposed on the encapsulation layer 8.

Alternatively, in a specific implementation, as shown in FIG. 6, the touch display panel further includes a first buffer layer 6 between the encapsulation layer 8 and the touch conductive layers 4.

In some embodiments, the display layer includes a plurality of sub-pixels.

In some embodiments, as shown in FIG. 6, the sub-pixels include pixel driving circuits 501 on the base substrate 1 and light-emitting units 502 electrically connected with the pixel driving circuits 501. The light-emitting unit 502 includes an electroluminescent device, such as an organic light-emitting diode (OLED) device or a quantum dot light-emitting diode (QLED) device.

In some embodiments, as shown in FIG. 6, the pixel driving circuit 501 includes a thin-film transistor 5011 and a capacitor 5012. The thin-film transistor 5011 includes an active layer 50111, a gate G, a source S, and a drain D. The capacitor 5012 includes a first capacitor electrode 50121 and a second capacitor electrode 50122 at the side of the first capacitor electrode 50121 away from the base substrate 1. The first capacitor electrode 50121 is disposed in the same layer as the gate G. In a specific implementation, in FIG. 6, the thin-film transistor (TFT) has a top-gate structure, that is, the gate G is on the side of the active layer away from the base substrate 1. In FIG. 6, the source S and drain D are disposed in the same layer. The touch display panel further includes a second buffer layer 5013 between the base substrate 1 and the active layer, a first gate insulating layer 5013 between the active layer and the gate G, a second gate insulating layer 5014 between the gate G and the second capacitor electrode 50122, a first interlayer insulating layer 5015 between the second capacitor electrode 50122 and both the source S and drain D, a transfer electrode 5016 on the side of the source S and drain D away from the base substrate 1, a second interlayer insulating layer 5017 and a first planarization layer 5018 between both the source S and drain D and the transfer electrode 5016, and a second planarization layer 5019 on the side of the transfer electrode 5016 away from the base substrate 1. The transfer electrode 5016 is electrically connected with the drain D. The material of the active layer can include silicon or oxide semiconductors. The gate, source, and drain, capacitor, and transfer electrode can include metal materials.

It should be noted that the pixel driving circuit can also include more thin-film transistors and capacitors.

In some embodiments, as shown in FIG. 6, the electroluminescent device includes a stacked anode 5021, a light-emitting functional layer 5022, and a cathode 5023. The touch display panel further includes a pixel definition layer 5024 on the side of the second planarization layer 5019 away from the base substrate 1. The pixel definition layer has a first opening region and covers the edge of the anode 5021. The anode 5021, light-emitting functional layer 5022, and cathode 5023 are stacked in the first opening region to form the electroluminescent device. The transfer electrode 5016 is electrically connected with the anode 5021 of the electroluminescent device.

In a specific implementation, the first opening region corresponds to the light-emitting region of the light-emitting device, i.e., corresponding to the light-emitting region of the sub-pixel. The metal grid in the touch conductive layer corresponds to at least one light-emitting unit. As shown in FIG. 7, the orthographic projection of the light-emitting region 26 of the light-emitting unit is located within the orthographic projection of the grid 1401 on the base substrate, which can avoid the touch electrodes and touch signal lines blocking the light-emitting region of the sub-pixels.

In some embodiments, as shown in FIG. 6, the encapsulation layer 8 includes a stack of inorganic encapsulation layer 8/organic encapsulation layer 8/inorganic encapsulation layer 8.

In some embodiments, the source and drain of the thin-film transistor can be disposed in different layers, thereby saving wiring space and preventing short circuits even if the distance between the source and drain is reduced. For example, the drain is disposed on the side of the source facing away from the base substrate, and a third interlayer insulating layer is provided between the source and drain.

In some embodiments, as shown in FIG. 2, the first touch signal line 301 includes a second portion 3-2.

It should be noted that the second touch electrode extends along the first direction Y. When the second touch electrode needs to connect with the driving chip via the second touch signal line, the second touch signal line can be directly led out from the edge, near the first peripheral region, of the second touch electrode, achieving electrical connection between the second touch electrode and the drive chip without going through the other peripheral regions than the first peripheral region. However, the first touch electrodes extend along the second direction X and are arranged along the first direction Y, electrical connection between the first touch electrodes and the driving chip cannot be achieved only through the first portions in the peripheral region. In the touch display panel provided in the disclosure, the first touch signal line includes a second portion in the touch region, thereby achieving the electrical connection between the first touch electrode and the driving chip via the first touch signal line while reducing the size of the peripheral region.

In some embodiments, as shown in FIG. 2, the second portions 3-2 of the first touch signal lines 301 includes: first sub-portions 3011 extending along the first direction Y and electrically connected with the first portions 3-1; at least some of the second portions 3-2 of the first touch signal lines 301 further include: second sub-portions 3012 extending along the second direction X and electrically connected with the first sub-portions 3011 and the touch electrodes 2.

It should be noted that in FIG. 2, the second portion 3-2 of the first touch signal line 301 electrically connected with the first touch electrode 201 closest to the first peripheral region 1021 includes the first sub-portion 3011 but not the second sub-portion 3012. The remaining second portions 3-2 of the first touch signal lines 301 include both the first sub-portion 3011 and the second sub-portion 3012.

Of course, in a specific implementation, the second portion of each first touch signal line can include both the first sub-portion and the second sub-portion.

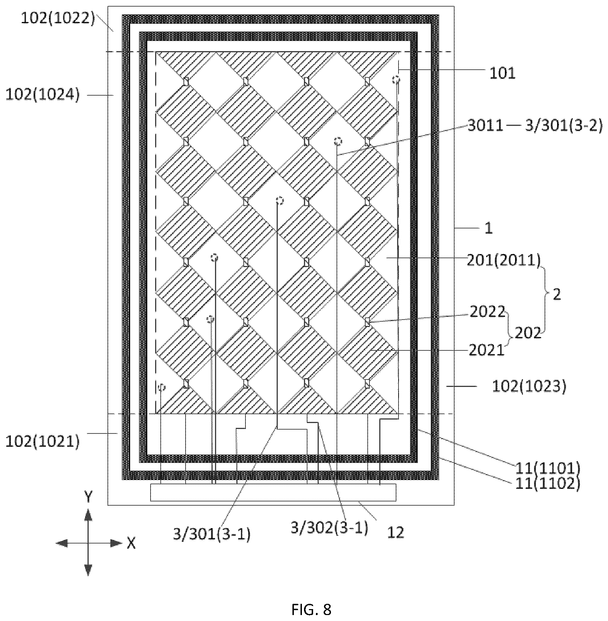

Alternatively, in some embodiments, as shown in FIG. 8, the second portion 3-2 of the first touch signal line 301 includes only the first sub-portion 3011 extending along the first direction Y and electrically connected with the first portion 3-1. This can reduce the overlapping region between the second portion of the first touch signal line and the second touch electrode, thereby reducing electrical interference between them.

In some embodiments, as shown in FIG. 2, the orthographic projection of the second sub-portion 3012 on the base substrate 1 overlaps with the orthographic projection of the first touch electrode 201 and the orthographic projection of the bridging electrode 2022on the base substrate 1, and the orthographic projection of the second sub-portion 3012on the base substrate 1 does not overlap with the orthographic projection of the second sub-electrode 2021 on the base substrate 1.

In the touch display panel provided in the disclosure, the bridging electrode is smaller in size compared to the second sub-electrode. The the orthographic projection of second sub-portion on the base substrate overlaps with the orthographic projection of the bridging electrode on the base substrate but not with the orthographic projection of the second sub-electrode on the base substrate, which minimizes the overlapping region between the second sub-portion and the second touch electrode, reducing electrical interference between them and improving touch accuracy.

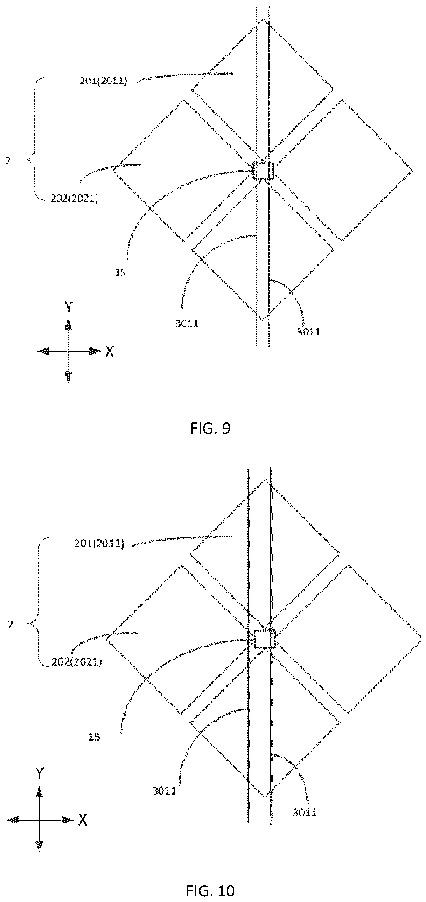

In some embodiments, as shown in FIG. 9, the orthographic projection of the first sub-portion 3011 on the base substrate 1 overlaps with the orthographic projection of the first sub-electrode 2011 on the base substrate 1, and the orthographic projection of the first sub-portion 3011 on the base substrate 1 does not overlap with the orthographic projection of the second touch electrode 202 on the base substrate 1.

It should be noted that FIG. 9 is an enlarged view of region C in FIG. 2.

In the touch display panel provided in the disclosure, the first sub-portion and the second touch electrode do not overlap, reducing the overlapping region between the first sub-portion and the second touch electrode, thereby reducing the electrical interference between them, which can improve touch accuracy.

In some embodiments, as shown in FIG. 9, the orthographic projection of the first sub-portion 3011 on the base substrate 1 is located within a region between the orthographic projections of two adjacent second touch electrodes 202 on the base substrate 1.

Alternatively, in some embodiments, as shown in FIG. 10, the orthographic projection of the first sub-portion 3011 on the base substrate 1 overlaps with the orthographic projection of the first sub-electrode 2011 on the base substrate 1; the orthographic projection of at least some of the first sub-portions 3011 on the base substrate 1 overlaps with the orthographic projection of the second sub-electrode 2021 on the base substrate 1.

In the touch display panel provided in the disclosure, for a case that the distance between two adjacent second touch electrodes is small, the orthographic projection of at least some of the first sub-portions on the base substrate overlaps with the orthographic projection of the second sub-electrode on the base substrate, which can reduce wiring difficulty.

It should be noted that FIG. 10 is another enlarged view of region C in FIG. 2.

In a specific implementation, as shown in FIG. 10, the orthographic projection of some of the first sub-portions 3011 on the base substrate 1 is located in the region between the orthographic projections of two adjacent second touch electrodes 202 on the base substrate 1, and the orthographic projection of some of the first sub-portions 3011 on the base substrate 1 overlaps with the orthographic projection of the second sub-electrode 2021 on the base substrate 1.

In some embodiments, a total area S1 of the overlapping region between the orthographic projection of the first sub-portion on the base substrate and the orthographic projection of the second sub-electrode on the base substrate, and an area S2 of the orthographic projection of the first touch signal line on the base substrate satisfiey the condition: S1/S2 ≤ 10%; and/or, a length L1 of the overlapping region between the orthographic projection of the first sub-portion on the base substrate and the orthographic projection of the second sub-electrode on the base substrate in the first direction Y, and a length L2 of the orthographic projection of the first touch signal line on the base substrate satisfy the condition: L1/L2 ≤ 10%.

In the touch display panel provided by the disclosure, S1/S2 ≤ 10% and/or L1/L2 ≤ 10%, can achieve that even when the orthographic projections of the first sub-portion and the second sub-electrode overlap, the total overlapping region corresponding to each second touch signal line can be minimized, thereby reducing electrical interference between the first sub-portion and the second touch electrode, and improving touch accuracy.

In some embodiments, as shown in FIGS. 2, 8, 9, and 10, the orthographic projection of at least some of the first sub-portions 3011 on the base substrate 1 overlaps with the orthographic projection of a same one first sub-electrode 2011 on the base substrate 1. This means that at least some of the first sub-portions 3011 correspond to the same column of first sub-electrodes 2011, which can save wiring space and reduce wiring difficulty.

In specific implementations, as shown in FIGS. 2 and 8, two adjacent first sub-portions 3011 corresponding to the same column of first sub-electrodes 2011 are electrically connected with adjacent first touch electrodes 201 respectively.

In some embodiments, as shown in FIG. 9, the orthographic projections of two adjacent first sub-portions 3011 corresponding to the same column of first sub-electrodes 2011 on the base substrate 1 are both located between the orthographic projections of adjacent second touch electrodes 202 on the base substrate 1.

Alternatively, as shown in FIG. 10, for the two adjacent first sub-portions 3011 corresponding to the same column of first sub-electrodes 2011, the orthographic projection of one of the adjacent first sub-portions 3011 on the base substrate 1 is located between the orthographic projections of two adjacent second touch electrodes 202 on the base substrate 1, and the orthographic projection of the other of the adjacent first sub-portions 3011 overlaps with the orthographic projection of the second sub-electrode 2021 on the base substrate 1.

Alternatively, in specific implementations, when the distance between two adjacent second touch electrodes is small, both the orthographic projections of two adjacent first sub-portions 3011 corresponding to the same column of first sub-electrodes 2011 on the base substrate 1 can be set to overlap with the orthographic projection of the second sub-electrode 2021 on the base substrate 1.

In some embodiments, as shown in FIGS. 9 to 12, the second touch conductive layer 402 further includes: a plurality of first dummy electrodes 15. The first dummy electrodes 15 are insulated from the touch electrodes 2.

The first dummy electrode 15 is located between first sub-electrodes 2011 of two different first touch electrodes 201 that are adjacent and between second sub-electrodes 2021 of two different second touch electrodes 202 that are adjacent.

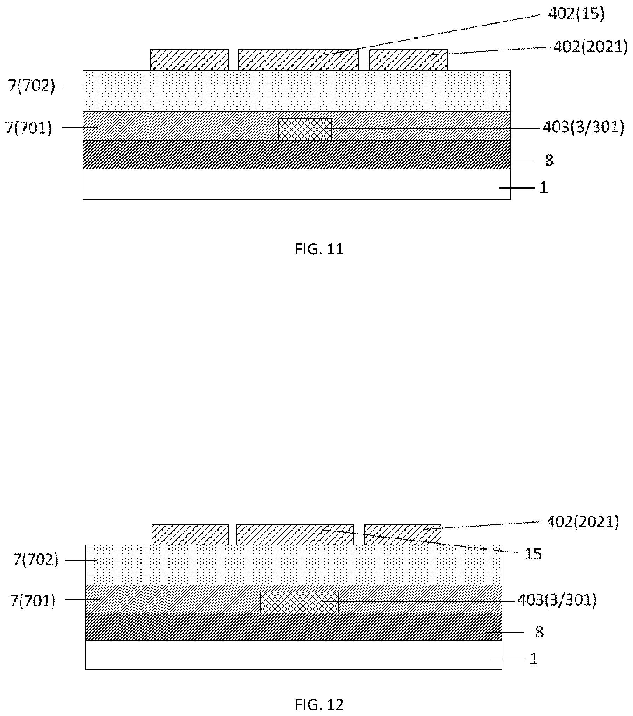

It should be noted that FIG. 11 is a cross-sectional view along line FF' in FIG. 2, and FIG. 12 is a cross-sectional view along line HH' in FIG. 2.

In the touch display panel provided by the disclosure, the first dummy electrodes between two adjacent first sub-electrodes of different touch electrodes and between two adjacent second sub-electrodes of second touch electrodes, thereby avoiding interference between different touch electrodes.

In specific implementations, the orthographic projection of the first dummy electrode on the base substrate is also a mesh structure, and the first dummy electrode is disposed in the same layer as the first sub-electrode and the second sub-electrode. The mesh structure has breaks to isolate the first dummy electrode from the first sub-electrode and the second sub-electrode, to be insulated from each other and not in electrical connection.

In some embodiments, as shown in FIGS. 9 to 12, at least some of the first sub-portions 3011 in the orthographic projection of the base substrate 1 overlaps with the orthographic projection of the first dummy electrode 15 on the base substrate 1.

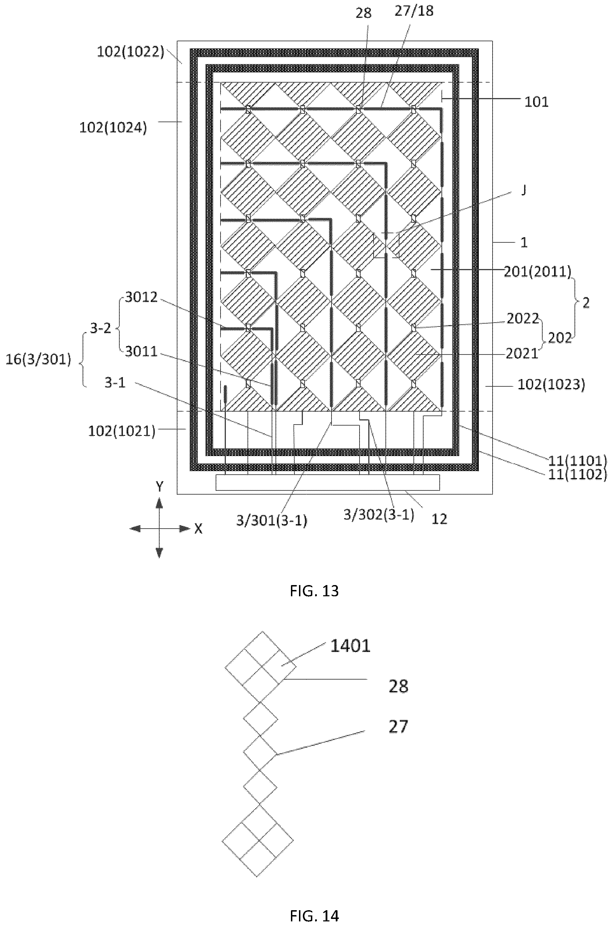

In some embodiments, as shown in FIG. 13, at least some of the second portions 3-2 of the first touch signal lines 301 include alternately arranged first width regions 27 and second width regions 28.

The orthographic projection of the first width region 27 on the base substrate 1 is within the orthographic projection of the first sub-electrode 2011 on the base substrate 1.

The orthographic projection of at least some of the second width regions 28 on the base substrate 1 overlaps with the orthographic projection of the bridging electrode 2022 on the base substrate 1.

The orthographic projection of at least some of the second width regions 28 on the base substrate 1 is within the orthographic projections of the region between two adjacent second sub-electrodes 2021 on the base substrate 1, or the orthographic projection of at least some of the second width regions 28 on the base substrate 1 overlaps with the orthographic projection of the second sub-electrode 2021 on the base substrate 1.

The width of the first width region 27 in the direction perpendicular to its extending direction is greater than the width of the second width region 28 in the direction perpendicular to its extending direction.

In the touch display panel provided in the disclosure, the orthographic projection of the first width region of the first touch signal line overlaps with the orthographic projection of the first touch electrode and does not overlap with the orthographic projection of the second touch electrode. The second width region overlaps with the second touch electrode or is located in the region between two adjacent different second touch electrodes. The width of the second width region is smaller than that of the first width region, that is, the width of the part whose orthographic projection overlapping with the orthographic projection of the second touch electrode or the part that is located in the region between two adjacent different second touch electrodes is reduced, which reduces the overlapping area between the first touch signal line and the second touch electrode, thereby lowering electrical interference between them, and improving touch accuracy.

In some embodiments, as shown in FIG. 13, the orthographic projection of the first width region 27 of the first sub-portion 3011 on the base substrate 1 is within the orthographic projection of the first sub-electrode 2011 on the base substrate 1. The orthographic projection of the second width region 28 on the base substrate 1 is within the region between the orthographic projections of two adjacent second sub-electrodes 2021 on the base substrate 1, or the orthographic projection of the second width region 28 on the base substrate 1 overlaps with the orthographic projection of the second sub-electrode 2021 on the base substrate 1.

In some embodiments, as shown in FIG. 13, the orthographic projection of the first width region 27 of the second sub-portion 3012 on the base substrate 1 is within the orthographic projection of the first sub-electrode 2011 on the base substrate 1. The orthographic projection of the second width region 28 on the base substrate 1 overlaps with the orthographic projection of the bridging electrode 2022 on the base substrate 1.

When the pattern of the touch conductive layer is a mesh structure, in some embodiments, as shown in FIGS. 14, the number of grids 1401 included in the second width region 28 in the direction perpendicular to the extending direction of the second width region 28 is less than the number of grids 1401 included in the first width region 27 in the direction perpendicular to the extending direction of the first width region 27. This ensures that the width of the first width region in the direction perpendicular to its extending direction is greater than the width of the second width region in the direction perpendicular to its extending direction, reducing the overlapping region between the first touch signal line and the second touch electrode, thereby lowering electrical interference and improving touch accuracy.

It should be noted that FIG. 14 is an enlarged view of region J of the first touch signal line in FIG. 13.

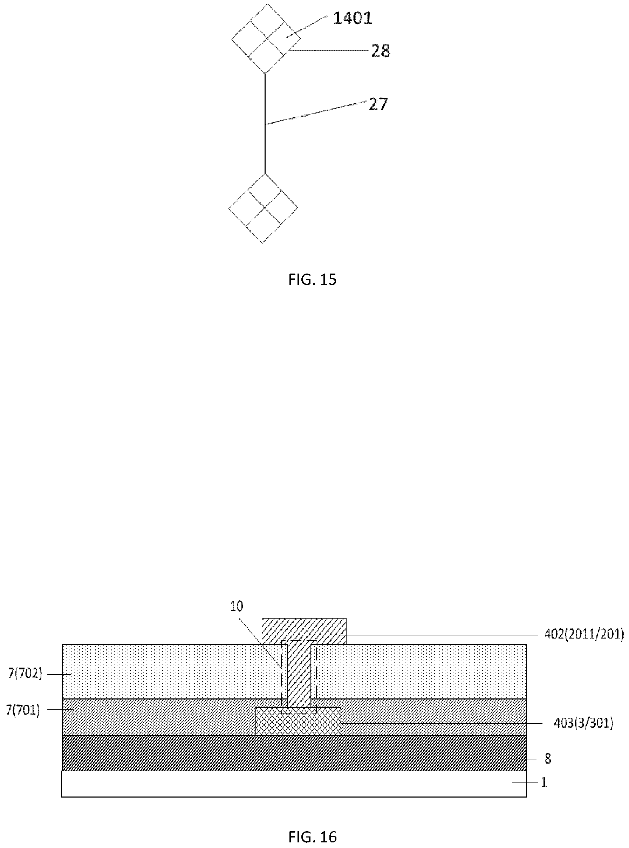

Alternatively, in some embodiments, as shown in FIG. 15, the pattern of the second width region 28 is a line. That is, the pattern of the second width region includes only a single metal line and does not include a complete grid. This ensures that the width of the first width region in the direction perpendicular to its extending direction is greater than the width of the second width region in the direction perpendicular to its extending direction, reducing the overlapping region between the first touch signal line and the second touch electrode, thereby lowering electrical interference and improving touch accuracy.

It should be noted that FIG. 15 is another enlarged view of region J of the first touch signal line in FIG. 13. FIG. 5 shows the example of a linear second width region of the first touch signal line. Of course, the pattern of the second width region can be a zigzag, which is part of the mesh pattern.

In some embodiments, as shown in FIGS. 2 and 16, one end of the second sub-portion 3012, which is far from the first sub-portion 3011, is electrically connected with one end of the first touch electrode 201.

It should be noted that FIG. 16 is a cross-sectional view along line BB' in FIG. 2.

Alternatively, in some embodiments, as shown in FIG. 8, one end of the first sub-portion 3011, which is far from the first portion 3-1, is electrically connected with the first touch electrode 201.

Specifically, as shown in FIG. 16, the first touch electrode 201 is electrically connected with the first touch signal line 301 through the fourth via 10 that passes through the touch insulating layer 7. In FIG. 16, the third touch conductive layer 403 is located below the second touch conductive layer 402, and the fourth via 10 passes through both the first touch insulating layer 701 and the second touch insulating layer 702. When the third touch conductive layer is disposed on the side of the second touch conductive layer away from the base substrate, the fourth via passes through the second touch insulating layer.

In some embodiments, as shown in FIGS. 2, 13, and 17, the plurality of first touch signal lines 301 are divided into n first touch signal line groups 16, where n is a positive integer.

Each first touch signal line 301 in the first touch signal line group 16 corresponds one-to-one with the first touch electrode 201.

In each first touch signal line group 16, first sub-portions 3011 of multiple first touch signal lines 301 are arranged sequentially along the second direction X, and second sub-portions 3012 of the multiple first touch signal lines 301 are arranged sequentially along the first direction Y.

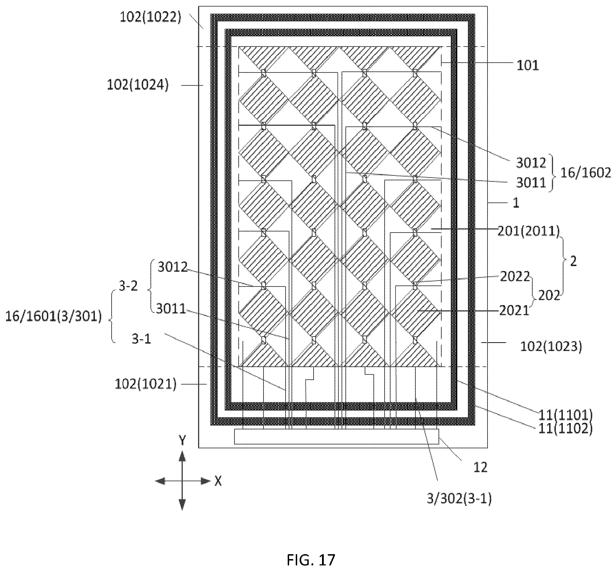

It should be noted that in FIGS. 2 and 13, n=1, while in FIG. 17, n=2. When n is greater than 1, it helps to improve the transmission speed of touch signals. When n=2, as shown in FIG. 17, the reference numerals for the two first touch signal line groups 16 are 1601 and 1602, respectively, and the two first touch signal line groups 16 are arranged in the second direction X.

In some embodiments, as shown in FIGS. 2, 13, and 17, in the direction where the second sub-portion 3012 points towards the first sub-portion 3011, the lengths of the first sub-portions 3011 in the first touch signal line group 16 increase gradually in the first direction Y. In the direction with an increasing distance from the first portion 3-1 in the touch region 101, the lengths of the second sub-portions 3012 in the first touch signal line group 16 increase gradually in the second direction X.

In some embodiments, as shown in FIGS. 2 and 13, when n=1, the orthographic projection of the first sub-portion 3011 of the first touch signal line 301 that is electrically connected with a first touch electrode 201, which is farthest from the first portion 3-1, on the base substrate 1, overlaps with the orthographic projection of an edge of the first touch electrode 201 on the base substrate 1.

In some embodiments, as shown in FIG. 17, when n=2, the two first touch signal line groups 16 are arranged sequentially in the second direction X.

The first sub-portions 3011 of the two first touch signal lines 301 that are electrically connected with the first touch electrodes 201 farthest from the first portions 3-1, and located in different first touch signal line groups 16, are closest to each other.

It should be noted that, since the second portion of the first touch signal line is in the touch region and the overlapping region between the first touch signal line and the second touch electrode is required to be minimized, the wiring space for the second portion of the first touch signal line is limited. There are significant differences in length between the second portions of different first touch signal lines, which results in significant resistance differences between the second portions of different first touch signal lines, leading to inconsistent signal loading on different first touch signal lines, and affecting touch performance.

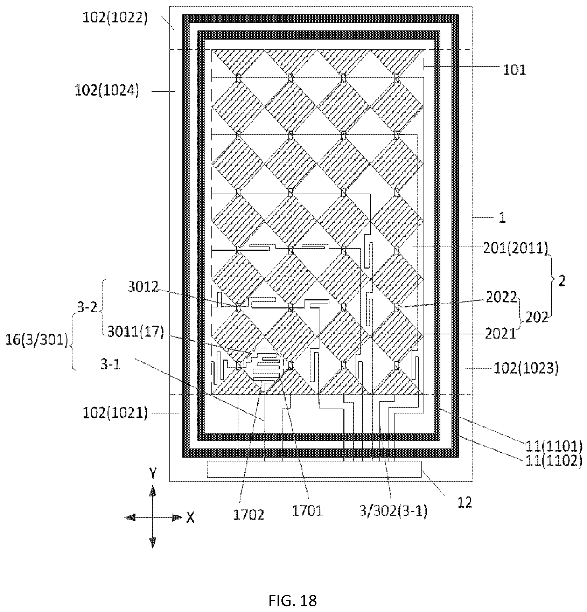

In some embodiments, as shown in FIG. 18, the first sub-portion 3011 and/or the second sub-portion 3012 of the second portion 3-2 include a first compensation portion 17.

The first compensation portion 17 extends in a zigzag pattern.

In specific implementations, as shown in FIG. 18, except for the second portion 3-2 that is electrically connected with the first touch electrode 201 farthest from the first portion 3-1, the first sub-portion 3011 and/or the second sub-portion 3012 of the remaining second portions 3-2 include the first compensation portion 17. The first compensation portion 17 extends in a zigzag pattern.

In the touch display panel provided in the disclosure, at least some of the second portions of the first touch signal lines include the first compensation portions, which extend in a zigzag pattern. Compared to a straight extension, this can increase the length of the signal line, thereby reducing the resistance difference between the second portions of different first touch signal lines within the limited wiring space by setting the first compensation portion, improving touch performance.

In some embodiments, as shown in FIG. 18, the pattern of the orthographic projection of the first compensation portion 17 on the base substrate 1 is composed of segments 1701 extending in the first direction Y and segments 1702 extending in the second direction X, arranged alternately.

It should be noted that the first compensation portion extends in a zigzag pattern, which can extend along a course with turns and in one direction or extend in a loop or by any other extension method. In specific implementations, the zigzag extension pattern of the first compensation portion can be specifically set according to the wiring space and the resistance difference requirements of the touch signal lines.

In some embodiments, as shown in FIG. 18, in any two first touch signal lines 301 of the first touch signal line group 16, the number of first compensation portions 17 included in the first touch signal line 301 electrically connected with the first touch electrode 201 closer to the first portion 3-1 is greater than the number of first compensation portions 17 included in the first touch signal line 301 electrically connected with the first touch electrode 201 farther from the first portion 3-1. That is, the number of first compensation portions included in the second portion electrically connected with the first touch electrode closer to the first portion, i.e., the first peripheral region, is greater.

It should be noted that the length of the second portion electrically connected with the first touch electrode closer to the first portion, i.e., the first peripheral region, is shorter.

In the touch display panel provided in the disclosure, the number of first compensation portions in the second portion electrically connected with the first touch electrode closer to the first portion, i.e., the first peripheral region, is greater, which helps eliminate the resistance differences between the second portions of different first touch signal lines, thereby improving touch performance.

In some embodiments, as shown in FIG. 18, in two first touch signal lines 301 in the first touch signal line group 16, a total length of the first compensation portion 17 of the first touch signal line 301 which is electrically connected with the first touch electrode 201 closer to the first portion 3-1, is greater than a total length of the first compensation portion 17 of the first touch signal line 301 which is electrically connected with the first touch electrode 201 farther from the first portion 3-1. That is, the total length of the first compensation portion of the second portion electrically connected with the first touch electrode closer to the first portion, i.e., the first peripheral region, is greater.

In the touch display panel according to embodiments of the disclosure, the total length of the first compensation portion included in the second portion electrically connected with the first touch electrode closer to the first portion, i.e., the first peripheral region, is greater, is more conducive to eliminating resistance differences between the second portions of different first touch signal lines, thereby improving touch performance.

In some embodiments, as shown in FIG. 18, the orthographic projection of the first compensation portion 17 on the base substrate 1 is within the orthographic projection of the first sub-electrode 2011 on the base substrate 1.

Of course, other resistance compensation methods may also be adopted in specific implementations.

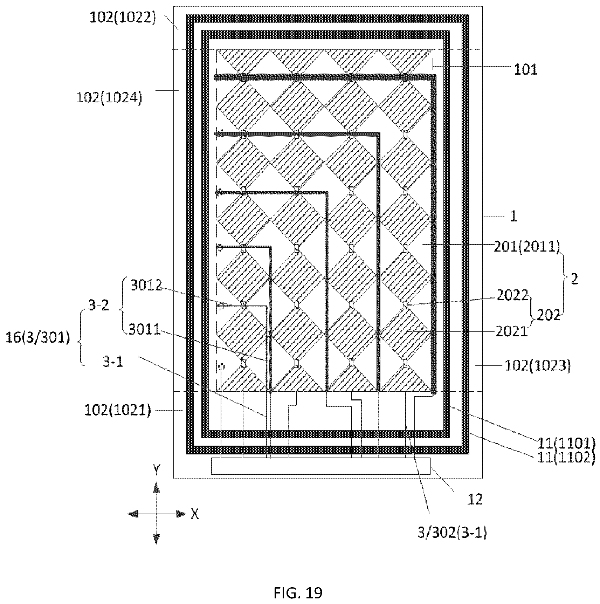

In some embodiments, as shown in FIG. 19, in the direction with an increasing distance from the first portion 3-1 in the touch region 101, the line widths of the second portions 3-2 in the first touch signal line group 16 gradually increase in the direction perpendicular to the extending direction.

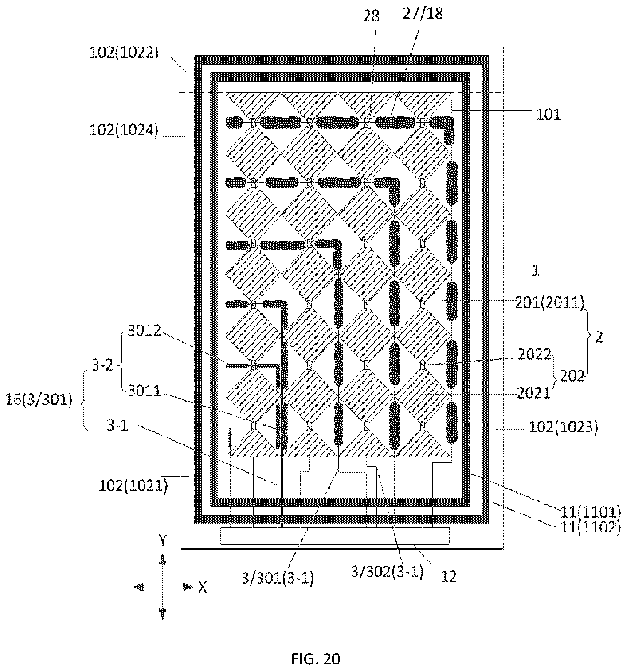

Alternatively, in some embodiments, as shown in FIGS. 13 and 20, at least some of the second portions 3-2 of the first touch signal lines 301 include at least one second compensation portion 18.

The width of the second compensation portion 18 in the direction perpendicular to the extending direction is greater than the width of the remaining region of the second portion 3-2 in the direction perpendicular to the extending direction.

In the two first touch signal lines 301 of the first touch signal line group 16, the number of second compensation portions 18 included in the first touch signal line 301 electrically connected with the first touch electrode 201 closer to the first portion 3-1 is less than the number of second compensation portions 18 included in the first touch signal line 301 electrically connected with the first touch electrode 201 farther from the first portion 3-1.

In the touch display panel according to embodiments of the disclosure, the resistance of the touch signal line can be reduced by setting a wider second compensation portion. The number of second compensation portions included in the first touch signal line electrically connected with the first touch electrode farther from the first peripheral region is greater, which reduces the resistance of the longer first touch signal line more, thus reducing the resistance differences between different first touch signal lines and improving touch performance.

It should be noted that the second compensation portion 18 shown in FIGS. 13 and 20 corresponds to the first width region 27.

In some embodiments, as shown in FIG. 13, the widths of the second compensation portions 18 in different first touch signal lines 301 in the direction perpendicular to the extending direction are the same.

Alternatively, in some embodiments, as shown in FIG. 20, the widths of the second compensation portions 18 at different positions in the same first touch signal line 301 in the direction perpendicular to the extending direction are the same. In the two first touch signal lines 301 of the first touch signal line group 16, the width of the second compensation portion 18 included in the first touch signal line 301 electrically connected with the first touch electrode 201 closer to the first portion 3-1 in the direction perpendicular to the extending direction is smaller than the width of the second compensation portion 18 included in the first touch signal line 301 electrically connected with the first touch electrode 201 farther from the first portion 3-1 in the direction perpendicular to the extending direction.

That is, the resistance of the second compensation portion included in the first touch signal line electrically connected with the first touch electrode farther from the first peripheral region is smaller, further reducing the resistance of the longer first touch signal line, thereby reducing the resistance differences between different first touch signal lines and improving touch performance.

In some embodiments, as shown in FIGS. 13 and 20, the orthographic projection of the second compensation portion 18 on the base substrate 1 is within the orthographic projection of the first sub-electrode 2011 on the base substrate 1. As such, increasing the width of the first touch signal line will not increase the overlapping region between the first touch signal line and the second touch electrode, reducing the electrical interference between them.

In some embodiments, as shown in FIGS. 2, 8, 13, 17, 18, 19, and 20, the second touch signal lines 302 are electrically connected with the second touch electrodes 202 one-to-one, and the second touch signal lines 302 include only the first portions 3-1.

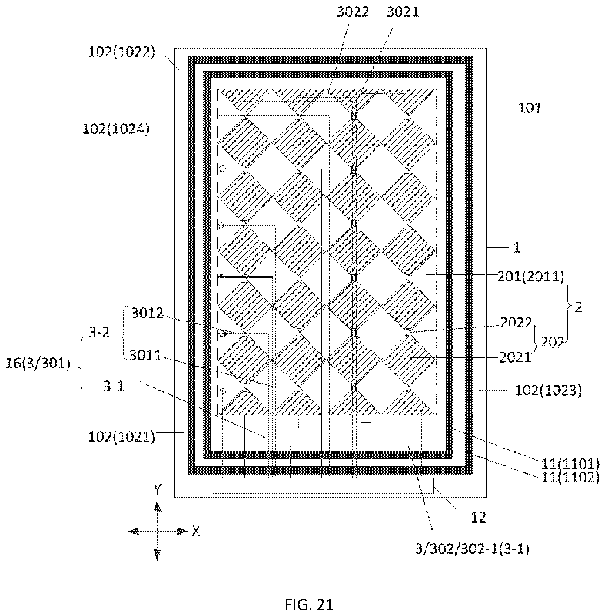

Alternatively, in some embodiments, as shown in FIG. 21, the plurality of second touch signal lines 302 include a plurality of first type second touch signal lines 302-1 and a plurality of second type second touch signal lines 302-2.

The first type second touch signal line 302-1 includes only the first portion 3-1, and the first type second touch signal line 302-1 is electrically connected with the second touch electrode 202 one-to-one.

The second type second touch signal line 302-2 includes the first portion 3-1 and the second portion 3-2, and the second type second touch signal line 302-2 is electrically connected with the second touch electrode 202 one-to-one, and the second portion 3-2 of the second type second touch signal line 302-2 is electrically connected with the second sub-electrode 2021, farthest from the first portion 3-1, of the second touch electrode 202.

In the touch display panel according to embodiments of the disclosure, each second touch electrode connects with multiple second touch signal lines, thereby improving the transmission efficiency of touch signals.

In some embodiments, as shown in FIG. 21, multiple second touch signal lines 302 are located in one first touch signal line group 16 on one side.

In some embodiments, the plurality of first touch signal lines are divided into two first touch signal line groups, and multiple second type second touch signal lines are located between the two first touch signal line groups.

In some embodiments, as shown in FIG. 21, the second portion 3-2 of the second type second touch signal line 302-2 includes: a third sub-portion 3021 extending along the first direction Y and electrically connected with the first portion 3-1.

At least some of the second portions 3-2 of the second type second touch signal lines 302-2 further include: a fourth sub-portion 3022 extending along the second direction X and electrically connected with the third sub-portion 3021 and the second touch electrode 202.

In some embodiments, as shown in FIG. 21, the orthographic projection of the fourth sub-portion 3022 on the base substrate 1 overlaps with the orthographic projections of the second sub-electrode 2021 and the first sub-electrode 2011 on the base substrate 1.

In some embodiments, as shown in FIG. 21, the orthographic projection of the third sub-portion 3021 on the base substrate 1 overlaps with the orthographic projections of the second sub-electrode 2021 and the bridging electrode 2022 on the base substrate 1, and the orthographic projection of the third sub-portion 3021 on the base substrate 1 does not overlap with the orthographic projection of the second touch electrode 202 on the base substrate 1. This can reduce the overlapping region between the first touch electrode and the second touch signal line, reducing electrical interference between them, thus avoiding an impact on the touch accuracy and improving touch performance.

Alternatively, when the size of the bridging electrode is small and the wiring space is limited, the orthographic projection of the third sub-portion on the base substrate can overlap with the orthographic projection of the second touch electrode on the base substrate.

In some embodiments, a total area S3 of the overlapping region between the orthographic projection of the second portion of a second type second touch signal line and the orthographic projection of the first touch electrode on the base substrate, and the area S4 of the orthographic projection of the second portion of the second type second touch signal line on the base substrate satisfy: S3/S4≤10%; and/or, a length L3 of the overlapping region between the orthographic projection of the second portion of the second type second touch signal line and the orthographic projection of the first touch electrode on the base substrate in the first direction Y, and a length L4 of the orthographic projection of the second portion of the second type second touch signal line on the base substrate satisfy: L3/L4≤10%.

As such, the overlapping region between the second portion of the second type second touch signal line and the first touch electrode can be reduced, minimizing electrical interference between them, thereby avoiding an impact on touch accuracy and improving touch performance.

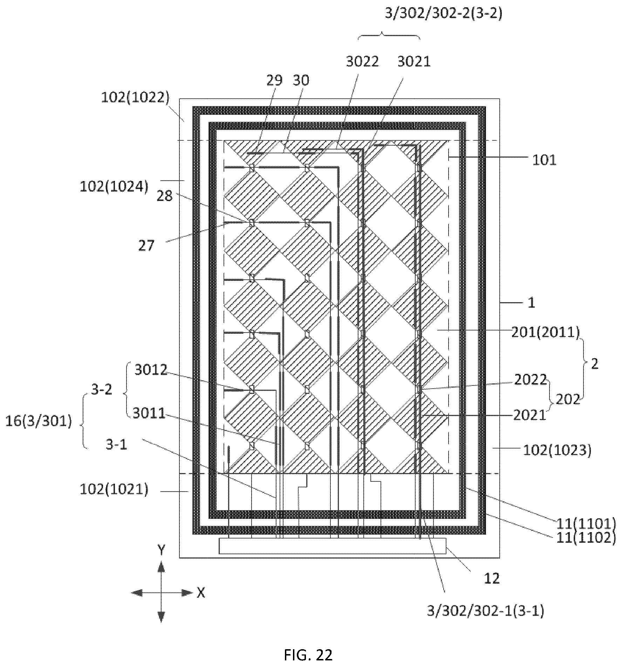

In some embodiments, as shown in FIG. 22, at least some of the second portions 3-2 of the second type second touch signal lines 302-2 include a third width region(s) 29 and a fourth width region(s) 30.

The third width region(s) 29 and the fourth width region(s) 30 are alternately arranged.

The orthographic projection of the third width region 29 on the base substrate 1 overlaps with the orthographic projection of the first sub-electrode 2011 on the base substrate 1, and the orthographic projection of the third width region 29 on the base substrate 1 does not overlap with the orthographic projection of the second sub-electrode 2021 on the base substrate 1, while the orthographic projection of the fourth width region 30 on the base substrate 1 overlaps with the orthographic projection of the second sub-electrode 2021 on the base substrate 1.

The width of the third width region 29 in the direction perpendicular to the extending direction is greater than the width of the fourth width region 30 in the direction perpendicular to the extending direction.

In the touch display panel according to embodiments of the disclosure, the overlapping area between the second type second touch signal line and the second sub-electrode can be reduced by reducing the width of the overlapping region, thereby reducing electrical interference between them and improving touch performance.

In specific implementations, a pattern of the orthographic projection of the second type second touch signal line in the touch region on the base substrate is also a mesh structure, including multiple grids.

The number of grids in the fourth width region in the direction perpendicular to the extending direction is less than the number of grids in the third width region in the direction perpendicular to the extending direction.

Alternatively, the third width region includes multiple grids, and the pattern of the fourth width region on the orthographic projection of the base substrate is a line.

As such, the width of the third width region in the direction perpendicular to its extending direction is greater than the width of the fourth width region in the direction perpendicular to its extending direction, reducing the overlapping area between the second touch signal line and the first touch electrode, reducing the electrical interference between them, and improving touch accuracy.

In specific implementations, the patterns of the third width region and the fourth width region can be the same or similar to the patterns of the first width region and the second width region shown in FIGS. 14 and 15, which are not repeated here.

In some embodiments, as shown in FIGS. 21 and 22, in the direction with an increasing distance from the first portion 3-1 in the touch region 101, the lengths of the fourth sub-portions 3022 in the second direction X of multiple second type second touch signal lines 302-2 gradually decrease.

In the direction from the fourth sub-portion 3022 to the third sub-portion 3021, the lengths of the third sub-portions 3021 of multiple second type second touch signal lines 302-2 in the first direction Y gradually decrease.

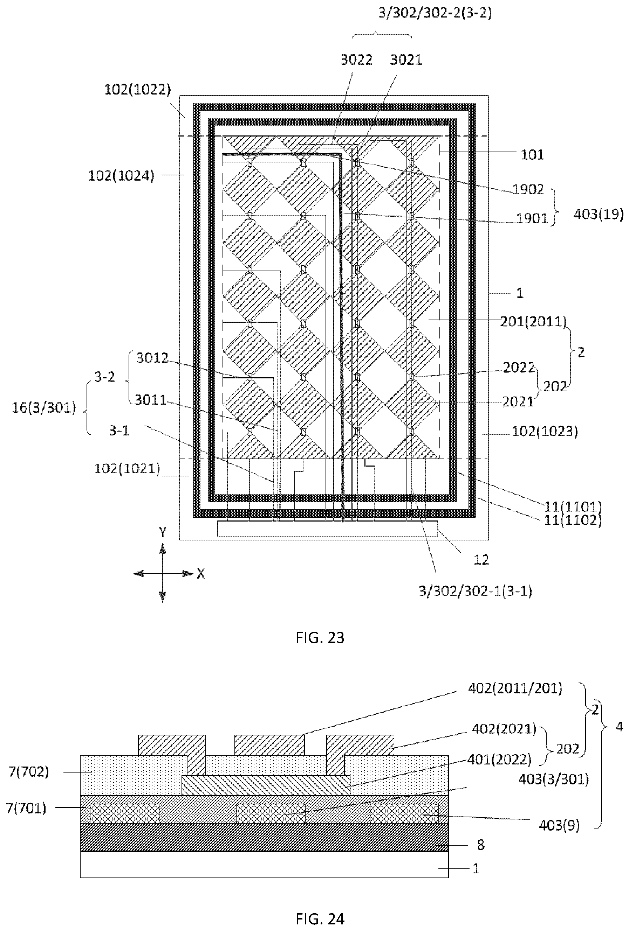

In some embodiments, as shown in FIG. 23, the third touch conductive layer 403 further includes: a first shielding signal line 19 between the second portion 3-2 of the first touch signal line 301 and the second portion 3-2 of the second type second touch signal line 302-2.

The first shielding signal line 19 includes: a third portion 1901 extending from the touch region 101 to the peripheral region 102 in the first direction Y, and a fourth portion 1902 extending in the second direction X and electrically connected with the third portion 1901.

In the second direction X, the third portion 1901 is located between the first sub-portion 3011 and the third sub-portion 3021; in the first direction Y, the fourth portion 1902 is located between the second sub-portion 3012 and the fourth sub-portion 3022.

In the touch display panel according to embodiments of the disclosure, the first shielding signal line is arranged between the second portion of the first touch signal line and the second portion of the second type second touch signal line to avoid signal interference between the second portion of the first touch signal line and the second portion of the second type second touch signal line.

It should be noted that FIG. 23 illustrates an example where the touch display panel includes one first touch signal line group. In specific implementations, the touch display panel may include two first touch signal line groups. The first shielding signal lines are set for both first touch signal line groups and multiple second type second touch signal lines.

In specific implementations, the first shielding signal line is electrically connected with the driving chip through the bonding electrode. The signal loaded on the first shielding signal line can be a constant voltage signal. For example, the signal loaded on the first shielding signal line can be a ground level signal.

In some embodiments, as shown in FIG. 24, the third touch conductive layer 403 further includes: multiple second dummy electrodes 9.

The second dummy electrodes 9 are spaced apart from and insulated from the second portions 3-2.

In embodiments of the disclosure, the third touch conductive layer further includes the second dummy electrodes, thereby avoiding the issue of uneven distribution of the metal lines in the mesh structure of the third touch conductive layer affecting display uniformity, and improving display effect.

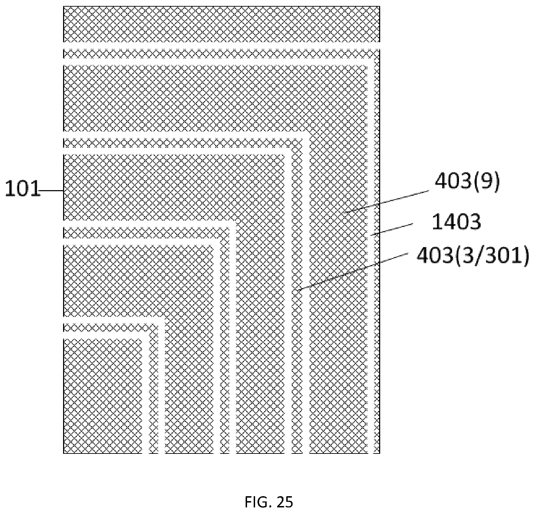

In specific implementations, as shown in FIG. 25, the third touch conductive layer 403 is set over the entire touch region, and the specific pattern of the third touch conductive layer 403 is a mesh pattern (not shown), with a break 1403 between the second dummy electrode 9 and the second portion 3-2 to ensure that the second dummy electrode 9 and the second portion 3-2 are spaced apart and insulated from each other.

It should be noted that FIG. 24 illustrates an example where the touch display panel includes one first touch signal line group and multiple second touch signal lines all are first type second touch signal lines. In specific implementations, for cases where there are multiple first touch signal line groups and/or multiple second touch signal lines include second type second touch signal lines, the second dummy electrode can be set, as long as insulation between the second dummy electrode and the second portion are disconnected due to a break.

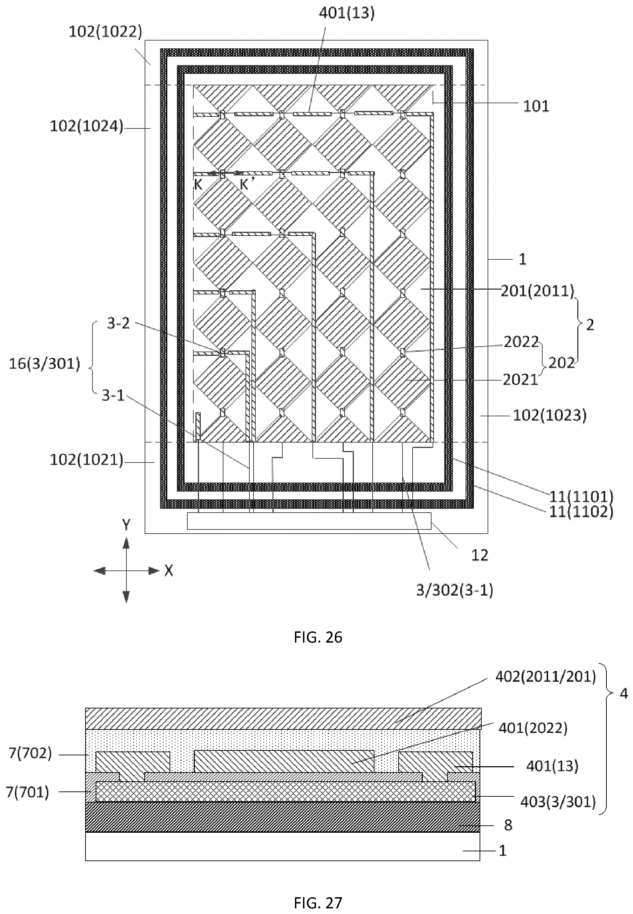

In some embodiments, as shown in FIG. 27, the third touch conductive layer 403 is disposed between the base substrate 1 and the first touch conductive layer 401.

As shown in FIGS. 26 and 27, the first touch conductive layer 401 further includes: multiple first connection electrodes 13. The first connection electrode 13 is electrically connected with the second portion 3-2.

It should be noted that FIG. 27 is a cross-sectional view along line KK' in FIG. 26.

In the touch display panel according to embodiments of the disclosure, the first connection electrode on the first touch conductive layer is set to be electrically connected with the second portion of the touch signal line, thereby reducing the resistance of the touch signal line and improving signal transmission speed.

It should be noted that FIGS. 26 and 27 illustrate an example where the second portion in the touch region is the second portion of the first touch signal line, i.e., the first connection electrode is electrically connected with the second portion of the first touch signal line. In specific implementations, when multiple second touch signal lines include second type second touch signal lines, the first touch conductive layer further includes the first connection electrode electrically connected with the second portion of the second type second touch signal line.

In specific implementations, the pattern of the first connection electrode on the orthographic projection of the base substrate is a mesh structure, with breaks allowing the grid of the first connection electrode to be disconnected from the grid of the bridging electrode.

In some embodiments, the orthographic projection of the first connection electrode on the base substrate overlaps with the orthographic projection of the first sub-electrode on the base substrate, but does not overlap with the orthographic projection of the second sub-electrode on the base substrate.

Alternatively, in some embodiments, as shown in FIG. 26, the orthographic projection of some of the first connection electrodes 13 on the base substrate is within the orthographic projection of the first sub-electrode 2011 on the base substrate. The orthographic projection of some of the first connection electrodes 13 on the base substrate, overlaps with both the orthographic projections of the first sub-electrode 2011 and the second sub-electrode 2021 on the base substrate.

In specific implementations, the orthographic projection of the first connection electrode electrically connected with the second sub-portion on the base substrate is within the orthographic projection of the first sub-electrode on the base substrate, while the orthographic projection of the first connection electrode electrically connected with the first sub-portion on the base substrate overlaps with both the orthographic projections of the first sub-electrode and the second sub-electrode on the base substrate.

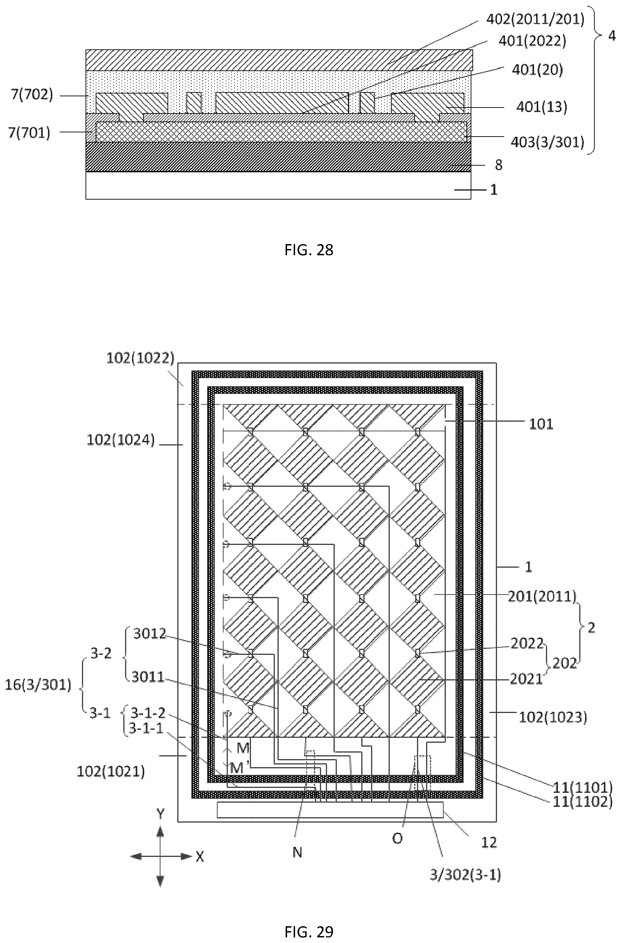

In some embodiments, as shown in FIG. 28, the first touch conductive layer 401 further includes a third dummy electrode 20 between the first connection electrode 13 and the bridging electrode 2022, which helps to avoid signal interference between the first connection electrode and the bridging electrode, thereby enhancing touch performance.

In specific implementations, the pattern of the orthographic projection of the third dummy electrode on the base substrate is a mesh structure, with breaks allowing the grid of the first connection electrode to be disconnected from the grid of the third dummy electrode and allowing the grid of the bridging electrode to be disconnected from the grid of the third dummy electrode.

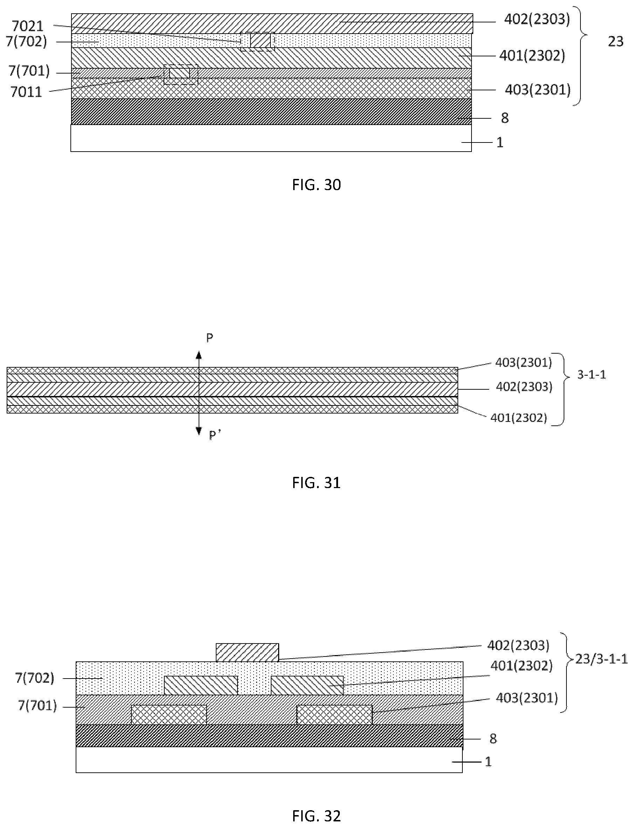

In some embodiments, as shown in FIG. 30, the first portion 3-1 includes multiple layers of sub-signal lines 23 arranged in a stack.

These multiple layers of sub-signal lines 23 include a first sub-signal line 2301, a second sub-signal line 2302, and a third sub-signal line 2303 sequentially disposed on one side of the base substrate 1. The first sub-signal line 2301, the second sub-signal line 2302, and the third sub-signal line 2303 are respectively disposed in three touch conductive layers.

In the touch display panel according to embodiments of the disclosure, the first portion of the touch signal line includes multiple layers of sub-signal lines disposed in a stack, which can reduce the resistance of the touch signal line and improve touch performance.

In some embodiments, as shown in FIG. 29, at least some of the first portions 3-1 include fifth sub-portions 3-1-1 extending in the second direction X and sixth sub-portions 3-1-2 extending in the first direction Y.

FIG. 30, for example, is a cross-sectional view along line MM' in FIG. 29.

In some embodiments, as shown in FIG. 30, the first touch insulating layer 701 is disposed between the first sub-signal line 2301 and the second sub-signal line 2302, and the second touch insulating layer 702 is disposed between the second sub-signal line 2302 and the third sub-signal line 2303.

At least part of the sixth sub-portion 3-1-2 includes the first sub-signal line 2301, the second sub-signal line 2302, and the third sub-signal line 2303. In the sixth sub-portion 3-1-2, the second sub-signal line 2302 is electrically connected with the first sub-signal line 2301 through a first via 7011 passing through the first touch insulating layer 701, and the third sub-signal line 2303 is electrically connected with the second sub-signal line 2302 through a second via 7021 passing through the second touch insulating layer 702.

The orthographic projection of the first via 7011 on the base substrate does not overlap with the orthographic projection of the second via 7021 on the base substrate.

In the touch display panel according to embodiments of the disclosure, electrical connection of multiple sub-signal lines can be realized by setting the first via and the second via in the touch insulating layers, and the orthographic projections of the first via and the second via on the base substrate do not overlap. This improves the flatness of the sub-signal lines and avoids issues of disconnection of sub-signal lines overlapping at the via position due to poor flatness caused by overlapping between the first via and second via, thereby improving conductivity and yield.

It should be noted that FIG. 30 illustrates an example where the third touch conductive layer 403 is disposed between the base substrate 1 and the first touch conductive layer 401. The third touch conductive layer 403 includes the first sub-signal line 2301, the first touch conductive layer 401 includes the second sub-signal line 2302, and the second touch conductive layer 402 includes the third sub-signal line 2303. When the third touch conductive layer is disposed on one side of the second touch conductive layer the base substrate, the first touch conductive layer includes the first sub-signal line, the second touch conductive layer includes the second sub-signal line, and the third touch conductive layer includes the third sub-signal line.

In some embodiments, as shown in FIGS. 31 and 32, the fifth sub-portion 3-1-1 includes one of the first sub-signal line 2301, the second sub-signal line 2302, and the third sub-signal line 2303.

The orthographic projections of the fifth sub-portion 3-1-1 on the base substrate 1 in different layers overlap.

In the touch display panel according to embodiments of the disclosure, for multiple adjacent fifth portions extending in the second direction, the orthographic projections of sub-signal lines in different layers overlap, reducing the width occupied by multiple adjacent fifth sub-portions and thus reducing the size of the first peripheral region, facilitating the achievement of a narrow bezel effect.

FIG. 31 is an enlarged view of region N in FIG. 29, and FIG. 32 is a cross-sectional view along line PP' in FIG. 31.

In some embodiments, as shown in FIG. 32, the arrangement order of the orthographic projections of adjacent fifth sub-portions 3-1-1 included in multiple adjacent first portions on the base substrate 1 is the same as the arrangement order of the multiple first portions.

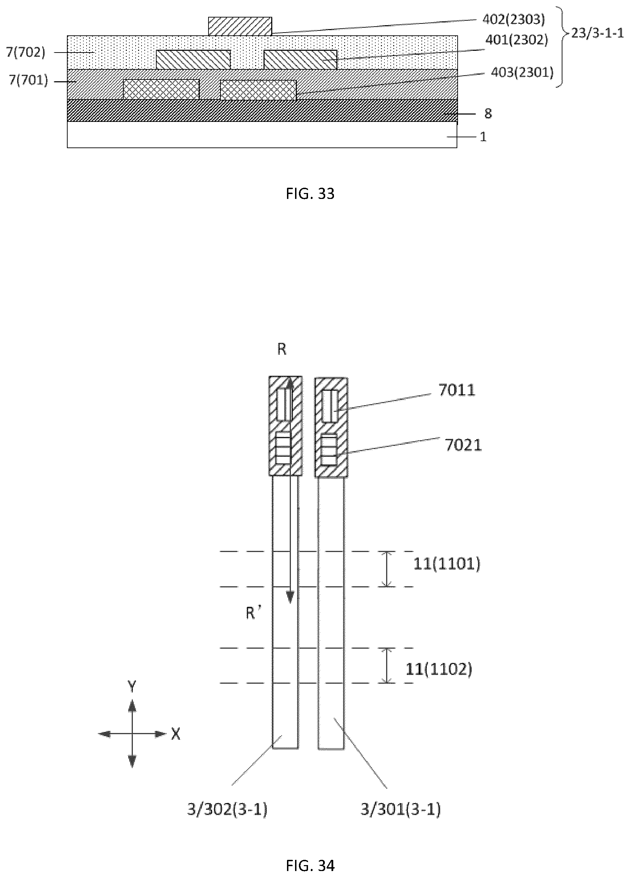

Alternatively, in some embodiments, as shown in FIG. 33, the arrangement order of the orthographic projections of adjacent fifth sub-portions 3-1-1 included in multiple adjacent first portions on the base substrate 1 is not entirely the same as the arrangement order of the multiple first portions, to increase the overlapping region of the orthographic projections of fifth sub-portions in different layers on the base substrate, further reducing the width occupied by the multiple adjacent fifth sub-portions and thereby reducing the size of the first peripheral region, facilitating the achievement of a narrow bezel effect.

In some embodiments, as shown in FIG. 29, the touch display panel further includes a dam 11 in the peripheral region 102.

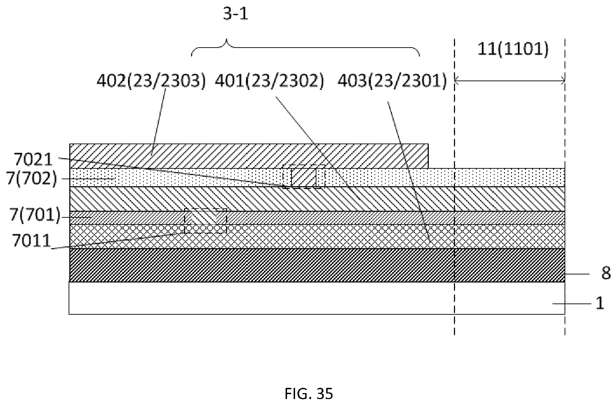

As shown in FIG. 34, the orthographic projection of the first portion 3-1 on the base substrate 1 overlaps with the orthographic projection of the dam 11 on the base substrate 1. As shown in FIG. 35, in the overlapping region between the orthographic projection of the first portion 3-1 and the orthographic projection of the dam 11 on the base substrate 1, the first portion 3-1 includes one or two layers of sub-signal lines 23.

It should be noted that FIG. 34 is an enlarged view of region O in FIG. 29, and FIG. 35 is a cross-sectional view along line RR' in FIG. 34. FIG. 35 illustrates an example where the first portion 3-1 includes two layers of sub-signal lines 23 in the region corresponding to the dam 11, with the two layers of sub-signal lines being the first sub-signal line 2301 and the third sub-signal line 2303. Of course, the two layers of sub-signal lines can be the second sub-signal line and the first sub-signal line, or the second sub-signal line and the third sub-signal line. When the region corresponding to the dam includes one layer of sub-signal line, the one layer of sub-signal line can be the first sub-signal line, the second sub-signal line, or the third sub-signal line.

In some embodiments, as shown in FIG. 29, the orthographic projection of the dam 11 on the base substrate 1 surrounds the touch region 101. The peripheral region 102 includes multiple dams 11, which are a first dam 1101, and a second dam 1102 at the side of the first dam 1101 away from the touch region 101.

In specific implementations, the touch display panel further includes a spacer on the side of the pixel definition layer away from the base substrate. The dam is used to block the overflow of the organic encapsulation layer. The dam includes, for example, a first sub-structure disposed in the same layer as the second planarization layer and a second sub-structure disposed in the same layer as the pixel definition layer. The second dam further includes a third sub-structure disposed in the same layer as the spacer layer at the side of the second sub-structure away from the first sub-structure. The dam material is an organic material. The patterning process of the sub-signal lines can easily result in metal residue around the organic dam structure, causing short circuits between adjacent touch signal lines.

In the touch display panel according to embodiments of the disclosure, the number of sub-signal lines is reduced in the region of the dam, which helps to reduce the possibility of short circuits between adjacent touch signal lines and improve production yield.

In some embodiments, in the region between the first dam and the second dam, a part of the region of the first dam facing the touch region, and a part of the region of the second dam away from the touch region, the first portion includes layer or layer sub-signal lines. That is, in the region near the dam, the number of sub-signal lines is also reduced, which helps to reduce the possibility of short circuits between adjacent touch signal lines and improve production yield.

In some embodiments, as shown in FIG. 34, in the region where the orthographic projection of the first portion 3-1 overlaps with the orthographic projection of the dam 11 on the base substrate, the width of the first portion 3-1 in the direction perpendicular to its extending direction is smaller than the width of the first portion 3-1 in the direction perpendicular to its extending direction in some of the region outside the dam 11. Thus, in the region corresponding to the dam, the distance between adjacent first portions can be increased, helping to reduce the possibility of short circuits between adjacent touch signal lines and improve production yield.

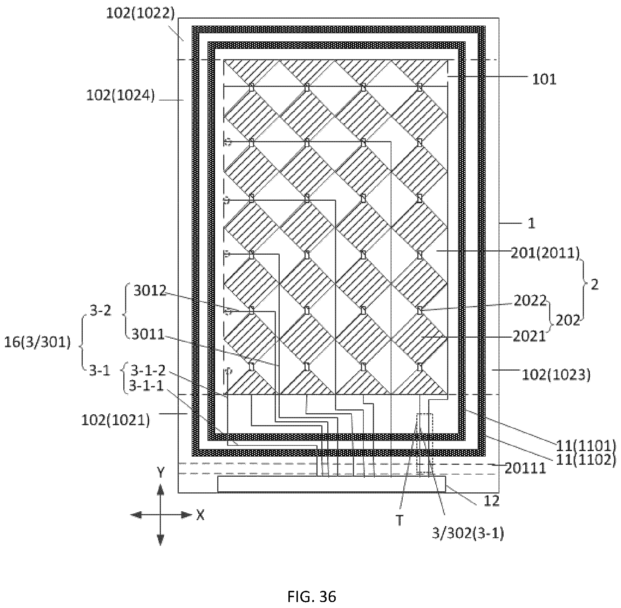

In some embodiments, as shown in FIGS. 36 to 40, the first peripheral region 1021 includes a bending region 10211 extending in the second direction X.

The orthographic projection of the first portion 3-1 on the base substrate 1 overlaps with the bending region 10211, and in the bending region 10211, the first portion 3-1 includes one layer of sub-signal lines 23.

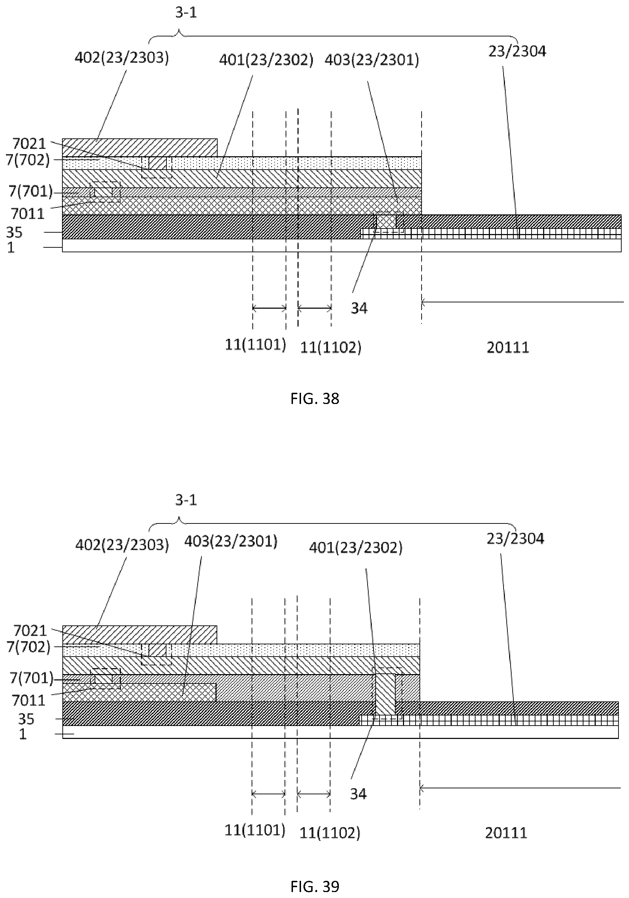

In some embodiments, as shown in FIGS. 38 to 40, the multiple layers of sub-signal lines 23 further include a fourth sub-signal line 2304 between the first sub-signal line 2301 and the base substrate 1.

The orthographic projection of the fourth sub-signal line 2304 on the base substrate 1 passes through the bending region 10211, and the orthographic projections of the first sub-signal line 2301, the second sub-signal line 2302, and the third sub-signal line 2303 on the base substrate 1 do not overlap with the bending region 10211.

In some embodiments, as shown in FIGS. 38 to 40, in the region outside the bending region 10211, the fourth sub-signal line 2304 is electrically connected with one of the first sub-signal line 2301, the second sub-signal line 2302, and the third sub-signal line 2303.

In the touch display panel according to embodiments of the disclosure, the fourth sub-signal line passing through the bending region is located between the first sub-signal line and the base substrate, that is, the fourth sub-signal line is closer to the base substrate compared to the other sub-signal lines. When the bending region is bent along the bending axis, the stress on the sub-signal lines can be reduced, avoiding bending fractures of the sub-signal lines and improving the yield of the touch display panel.

In specific implementations, the fourth sub-signal line is, for example, in the bending neutral layer, which is a layer that is not subject to tension or compression, or is located close to the bending neutral layer. Depending on the structure of the touch display panel, the fourth sub-signal line is disposed in the same layer as the drain or the transfer electrode.

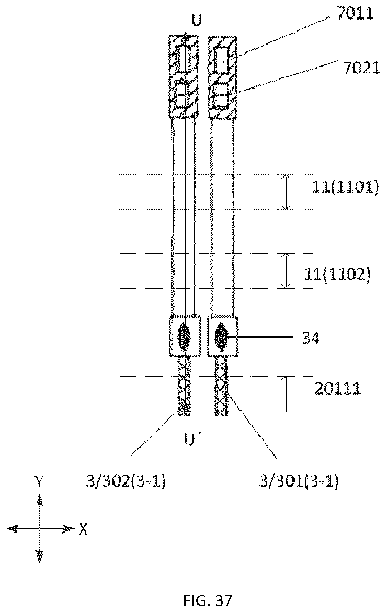

It should be noted that FIG. 37 is an enlarged view of region T in FIG. 36, and FIGS. 38 to 40 are cross-sectional views along line UU' in FIG. 37.

In some embodiments, as shown in FIG. 37, the bending region 20111 is located at the side of the second dam away from the touch region 101.

In some embodiments, as shown in FIGS. 38 to 40, the fourth sub-signal line 2304 is electrically connected with the remaining sub-signal lines 23, through a fifth via 34, on the side close to the second dam 1102.

In some embodiments, as shown in FIG. 38, the first sub-signal line 2301 is electrically connected with the fourth sub-signal line 2304 through the fifth via 34 passing through the display insulating layer 35.

Alternatively, in some embodiments, as shown in FIG. 39, the second sub-signal line 2302 is electrically connected with the fourth sub-signal line 2304 through the fifth via 34 passing through the first touch insulating layer 701 and the display insulating layer 35.

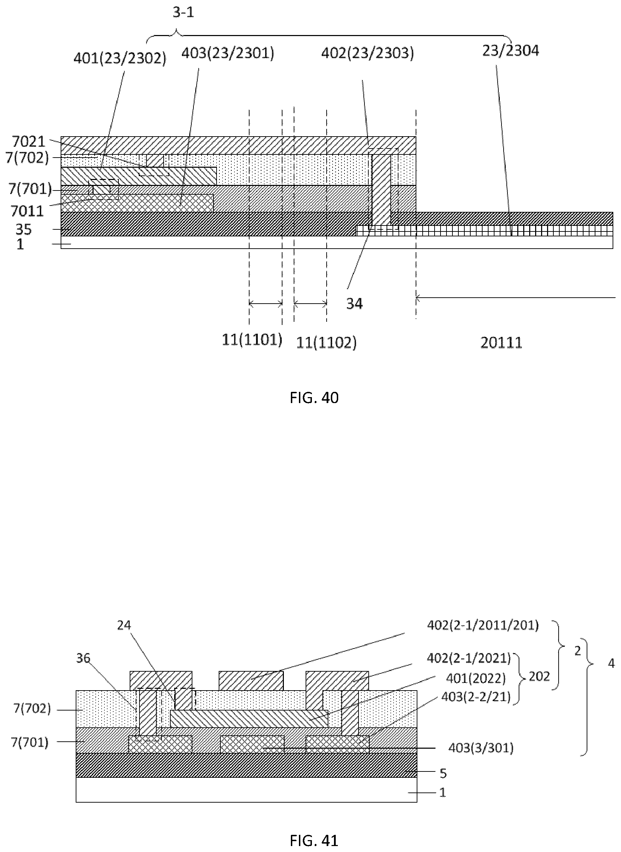

Alternatively, in some embodiments, as shown in FIG. 40, the third sub-signal line 2303 is electrically connected with the fourth sub-signal line 2304 through the fifth via 34 passing through the second touch insulating layer 702, the first touch insulating layer 701, and the display insulating layer 35.

In specific implementations, if the fourth sub-signal line is disposed in the same layer as the transfer electrode, the display insulating layer through which the fifth via passes includes, for example, the encapsulation layer, the pixel definition layer, and the second planarization layer. If the fourth sub-signal line is disposed in the same layer as the drain, the display insulating layer through which the fifth via passes includes, for example, the encapsulation layer, the pixel definition layer, the second planarization layer, and the first planarization layer.

Embodiments of the disclosure provide a touch display panel, as shown in FIGS. 41 to 42, which includes:
a base substrate 1, including a touch region 101 and a peripheral region 102 surrounding the touch region 101;
a display Layer 5 on one side of the base substrate 1, including multiple light-emitting units (not shown), where the light-emitting unit includes an anode, a light-emitting functional layer, and a cathode disposed in a stack;
a plurality of touch electrodes 2, disposed on the side of the display layer 5 facing away from the base substrate 1 and located in the touch region 101, where the touch electrode 2 includes sub-electrodes 2-1, and connection electrodes 2-2 which are disposed in a different layer from the sub-electrodes 2-1 and are electrically connected with the sub-electrodes 2-1.

It should be noted that in related art, for medium and large-sized touch display products over 10 inches, touch electrodes have a larger length and higher resistance, which increases the overlapping capacitance between the touch electrodes and the cathode, reducing touch performance.

In the touch display panel according to embodiments of the disclosure, touch electrodes include sub-electrodes and connection electrodes which are located in different layers but are in electrical connection, meaning that the touch electrodes consist of multiple conductive layers connected in parallel, reducing the resistance of the touch electrodes compared to single-layer sub-electrodes, thereby reducing the overlapping capacitance between the touch electrodes and the cathode and improving touch performance.

In some embodiments, as shown in FIGS. 41 to 42, the touch display panel includes multiple layers of touch conductive layers 4, which includes:
a first touch conductive layer 401 including a part of the plurality of touch electrodes 2;
a second touch conductive layer 402 on the side of the first touch conductive layer 401 facing away from the base substrate 1, including the remaining part of multiple touch electrodes 2;
a third touch conductive layer 403 between the first touch conductive layer 401 and the base substrate 1 or on the side of the second touch conductive layer 402 facing away from the base substrate 1, including the connection electrodes 2-2.

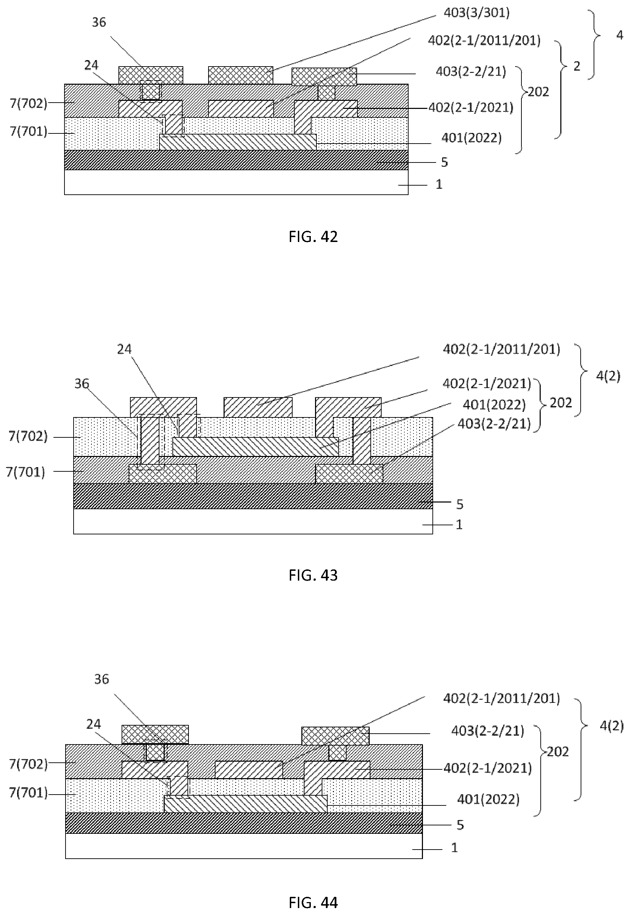

Specifically, in FIG. 41, the third touch conductive layer 403 is located between the first touch conductive layer 401 and the base substrate 1; in FIG. 42, the third touch conductive layer 403 is located on the side of the second touch conductive layer 402 facing away from the base substrate 1.

In some embodiments, as shown in FIGS. 41 to 42, the touch display panel further includes multiple layers of touch insulating layers 7. At least some of the touch insulating layers 7 are located between adjacent touch conductive layers 4.

The multiple layers of touch insulating layers 7 include: a first touch insulating layer 701, a second touch insulating layer 702, on the side of the first touch insulating layer 701 facing away from the base substrate 1. In FIG. 41, the first touch insulating layer 701 is located between the first touch conductive layer 401 and the third touch conductive layer 403, and the second touch insulating layer 702 is located between the first touch conductive layer 401 and the second touch conductive layer 402. In FIG. 42, the first touch insulating layer 701 is located between the first touch conductive layer 401 and the second touch conductive layer 402, and the second touch insulating layer 702 is located between the third touch conductive layer 403 and the second touch conductive layer 402.

In some embodiments, as shown in FIGS. 41 to 42, the plurality of touch electrodes 2 include:
a plurality of first touch electrodes 201 extending in the second direction X and arranged in the first direction Y, where the first touch electrode 201 includes multiple first sub-electrodes 2011 arranged in the second direction X;
a plurality of second touch electrodes 202 arranged in the second direction X and extending in the first direction Y, where the second touch electrode 202 includes multiple second sub-electrodes 2021 arranged in the first direction Y and bridging electrodes 2022 that electrically connect adjacent second sub-electrodes 2021.

Thus, sub-electrodes 2-1 include first sub-electrodes 2011 and second sub-electrodes 2021, where the first touch conductive layer 401 includes bridging electrodes 2022, and the second touch conductive layer 402 includes first sub-electrodes 2011 and second sub-electrodes 2021.

In some embodiments, as shown in FIGS. 41 to 42, the second sub-electrode 2021 is electrically connected with the bridging electrode 2022 through third via 24 that passes through the touch insulating layer 7. In FIG. 41, the third via 24 passes through the second touch insulating layer 702, while in FIG. 42, the third via 24 passes through the first touch insulating layer 701.

In some embodiments, as shown in FIGS. 41 to 42, multiple connection electrodes 2-2 include multiple second connection electrodes (not shown) and multiple third connection electrodes 22. The third touch conductive layer 403 includes multiple second connection electrodes (not shown) and multiple third connection electrodes 22.

The second connection electrodes (not shown) are electrically connected with the first touch electrodes 201, and the third connection electrodes 22 are electrically connected with the second touch electrodes 202. Specifically, the second connection electrodes (not shown) are electrically connected with the first sub-electrodes 2011, and the third connection electrodes 22 are electrically connected with the second sub-electrodes 2021.

In some embodiments, as shown in FIGS. 41 to 42, the connection electrodes 2-2 are electrically connected with the sub-electrodes 2-1 through sixth vias 36. In FIG. 41, the sixth vias 36 pass through the second touch insulating layer 702 and the first touch insulating layer 701, while in FIG. 42, the sixth vias 36 pass through the second touch insulating layer 702.

In specific implementations, as shown in FIG. 42, the connection electrodes 2-2 are electrically connected with the sub-electrodes 2-1 through only the sixth vias 36 that pass through one layer of the touch insulating layer 7. This reduces the production difficulty of the sixth vias compared to the situation where the sixth vias pass through multiple insulating layers.

In some embodiments, as shown in FIGS. 41 to 42, the touch display panel further includes touch signal lines 3.

In some embodiments, the touch signal lines can be set as described in previous embodiments and shown in FIGS. 2 to 40, where the touch signal lines 3 are electrically connected with the touch electrodes 2. The touch signal lines 3 include first portions 3-1 at one side of the touch region 101 in the first direction Y. At least some of the touch signal lines 3 further include second portions 3-2 located in the touch region 101 and electrically connected with the first portions 3-1. The second portions 3-2 are disposed in a different film layer than the touch electrodes 2, and the third touch conductive layer includes the second portions 3-2. The specific implementations of the display layer, encapsulation layer, touch electrodes, and touch signal lines are described in the previous embodiments and are not repeated here.

Alternatively, in some embodiments, the touch signal lines can be set as shown in FIG. 1, where the touch signal lines 3 are located in the peripheral region 102 without passing through the touch region 101. As shown in FIGS. 43 and 44, the third touch conductive layer 403 does not include touch signal lines in the touch region.

In some embodiments, the shape of the orthographic projection of the connection electrode on the base substrate is also a mesh structure.

In some embodiments, the touch insulating layer can be at least one of an organic insulating layer or an inorganic insulating layer. Preferably, the touch insulating layer is the organic insulating layer.

It should be noted that in the process of manufacturing the insulating layer, the thickness of the organic insulating layer can generally be greater than that of the inorganic insulating layer. Thus, compared to the inorganic insulating layer solution, the distance between the touch electrode and the cathode can be increased, thereby reducing the overlapping capacitance between the touch electrode and the cathode, and improving touch performance.

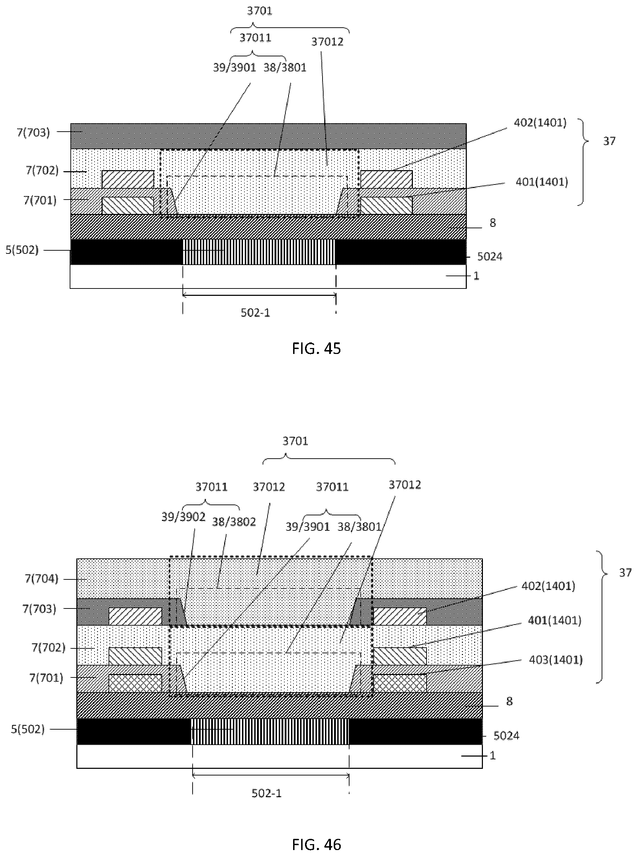

Embodiments of the disclosure provide a touch display panel, as shown in FIGS. 45, 46, and 47. The touch display panel includes: a base substrate 1, a display layer 5, and a touch layer 37 at a side, facing away from the base substrate 1, of the display layer 5.

The base substrate 1 includes a touch region 101 and a peripheral region 102 surrounding the touch region 101.

The display layer 5 includes a plurality of light-emitting units 502 in the touch region. The touch layer 37 includes multiple touch conductive layers 4 and multiple touch insulating layers 7. In the touch region, a pattern of the orthographic projection of the touch conductive layer 4 on the base substrate 1 includes multiple grids 1401, and each grid 1401 corresponds to at least one light-emitting unit 502. The orthographic projection of the light-emitting region 502-1 of the light-emitting unit 502 on the base substrate 1 is within the orthographic projection of the grid 1401 on the base substrate 1.

In the multiple touch insulating layers 7, some of the touch insulating layers 7 are located between adjacent touch conductive layers 4.

In the multiple touch insulating layers 7, some of the touch insulating layers 7 are disposed on the side of the touch conductive layer 4 farthest from the base substrate 1 facing away from the base substrate 1, and/or some of the touch insulating layers 7 are located between the touch conductive layer 4 closest to the base substrate 1 and the base substrate 1. Specifically, some of the touch insulating layers 7 are located between the touch conductive layer 4 closest to the base substrate 1 and the display layer 5.

The touch layer 37 includes multiple light extraction structures 3701. The light extraction structure 3701 includes a first sub-structure 37011 and a second sub-structure 37012 located on the side of the first sub-structure 37011 facing away from the base substrate 1.

The first sub-structure 37011 includes an opening 38. The orthographic projection of the opening 38 on the base substrate 1 covers the orthographic projection of the light-emitting region 502-1 of the light-emitting unit 502 on the base substrate 1. The first sub-structure 37011 includes inclined sidewalls 39 at the opening 38, and the second sub-structure 37012 covers the opening and the inclined sidewall 39. The refractive index of the first sub-structure 37011 is less than the refractive index of the second sub-structure 37012.

At least one of the multiple touch insulating layers 7 includes the first sub-structure 37011, and another touch insulating layer 7 on the side of the at least one of the multiple touch insulating layers 7 facing away from the base substrate 1 and adjacent to the at least one of the multiple touch insulating layers 7 includes the second sub-structure 37012.

In the touch display panel according to embodiments of the disclosure, the second sub-structure covers the opening and the inclined sidewall, and the refractive index of the first sub-structure is less than that of the second sub-structure. Thus, the light emitted from the light-emitting unit reaches the inclined sidewall for total internal reflection, and is emitted towards the light exit side of the touch display panel, improving light extraction efficiency. Additionally, forming the light extraction structure within the touch insulating layer can enhance light extraction efficiency without increasing the process steps or difficulty, thereby reducing costs.

In some embodiments, as shown in FIGS. 45 to 47, the multiple touch conductive layers 4 specifically include: a first touch conductive layer 401, and a second touch conductive layer 402 on the side of the first touch conductive layer 401 facing away from the base substrate 1.

In some embodiments, the multiple touch conductive layers include multiple touch electrodes. The first touch conductive layer includes a portion of multiple touch electrodes, and the second touch conductive layer includes the remaining portions of multiple touch electrodes.

In some embodiments, the multiple touch electrodes include:
multiple first touch electrodes, extending in the second direction X and arranged in the first direction Y, where the first touch electrodes include multiple first sub-electrodes arranged in the second direction X;
multiple second touch electrodes, arranged in the second direction X and extending in the first direction Y, where the second touch electrodes include multiple second sub-electrodes arranged in the first direction Y and bridging electrodes that electrically connect adjacent second sub-electrodes.

In some embodiments, as shown in FIG. 45, the multiple touch insulating layers 7 include: a first touch insulating layer 701, a second insulating layer 702 on the side of the first touch insulating layer 701 facing away from the base substrate 1, and a third insulating layer 703 on the side of the second touch insulating layer 702 facing away from the base substrate 1.

The first touch insulating layer 701 is located between the first touch conductive layer 401 and the display layer 5, serving as a buffer layer. The second touch insulating layer 702 is located between the first touch conductive layer 401 and the second touch conductive layer 402. The third touch insulating layer 703 is located on the side of the second touch conductive layer 402 facing away from the base substrate 1.

The first touch insulating layer 701 includes multiple first openings 3801 in the touch region 101. The orthographic projection of the first opening 3801 on the base substrate 1 covers the orthographic projection of the light-emitting region on the base substrate 1. The orthographic projection of the first opening 3801 on the base substrate 1 does not overlap with the orthographic projection of the metal lines of the grid 1401 of the touch conductive layer 4 on the base substrate 1.

At the first openings 3801, the first touch insulating layer 701 has first inclined sidewalls 3901, and the second touch insulating layer 702 covers the first inclined sidewalls 3901 and the first openings 3801. The refractive index of the second touch insulating layer 702 is greater than that of the first touch insulating layer 701.

In some embodiments, as shown in FIGS. 46 to 47, the multiple touch conductive layers 4 further include: a third touch conductive layer 403 between the first touch conductive layer 401 and the base substrate 1, or on the side of the second touch conductive layer 402 facing away from the base substrate 1.

In the touch region, the patterns of the orthographic projections of the first touch conductive layer, the second touch conductive layer, and the third touch conductive layer on the base substrate include multiple grids. Each grid corresponds to at least one light-emitting unit, and the orthographic projection of the light-emitting region of the light-emitting unit on the base substrate is within the orthographic projection of the grid on the base substrate 1.

In specific implementations, the third touch conductive layer includes connection electrodes and/or touch signal lines. When the touch conductive layer includes the third touch conductive layer, the specific configuration of the touch display panel refers to the previous embodiments related to FIGS. 2 to 44 and is not repeated here.

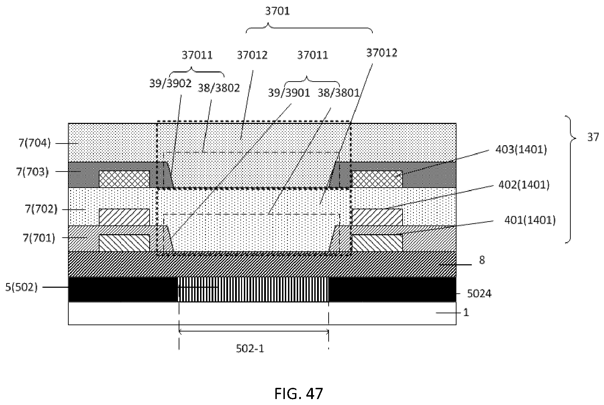

Specifically, in FIG. 46, the third touch conductive layer 403 is located between the first touch conductive layer 401 and the base substrate 1. In FIG. 47, the third touch conductive layer 403 is disposed on the side of the second touch conductive layer 402 facing away from the base substrate 1.

In some embodiments, as shown in FIGS. 46 and 47, there are the first touch insulating layer 701, the second touch insulating layer 702 on the side of the first touch insulating layer 701 facing away from the base substrate 1, the third touch insulating layer 703 on the side of the touch conductive layer 4 farthest from the base substrate 1 facing away from the base substrate 1, and the fourth touch insulating layer 704 on the side of the third touch insulating layer 703 facing away from the base substrate 1.

Specifically, in FIG. 46, the first touch insulating layer 701 is located between the first touch conductive layer 401 and the third touch conductive layer 403, and the second touch insulating layer 702 is located between the first touch conductive layer 401 and the second touch conductive layer 402. In FIG. 47, the first touch insulating layer 701 is located between the first touch conductive layer 401 and the second touch conductive layer 402, and the second touch insulating layer 702 is located between the third touch conductive layer 403 and the second touch conductive layer 402.

In some embodiments, as shown in FIGS. 46 and 47, the first touch insulating layer 701 includes multiple first openings 3801 in the touch region 101. The orthographic projection of the first opening 3801 on the base substrate 1 covers the orthographic projection of the light-emitting region on the base substrate 1.

At the first opening 3801, the first touch insulating layer 701 has first inclined sidewalls 3901, and the second touch insulating layer 702 covers the first inclined sidewalls 3901 and the first openings 3801.

The refractive index of the second touch insulating layer 702 is greater than that of the first touch insulating layer 701.

The third touch insulating layer 703 includes multiple second openings 3802 in the touch region 101. The orthographic projection of the second opening 3802 on the base substrate 1 covers the orthographic projection of the light-emitting region on the base substrate 1.

At the second openings 3802, the third touch insulating layer 703 has second inclined sidewalls 3902, and the fourth touch insulating layer 704 covers the second inclined sidewalls 3902 and the second openings 3802.

The refractive index of the fourth touch insulating layer 704 is greater than that of the third touch insulating layer 703.

That is, in the touch display panel according to embodiments of the disclosure, each light-emitting region corresponds to two stacked light extraction structures. The light reaching the inclined sidewalls of the two light extraction structures undergoes total internal reflection, which can further enhance the light extraction efficiency of the touch display panel.

In some embodiments, the orthographic projections of the first openings on the base substrate do not overlap with the orthographic projections of the touch signal lines or touch electrodes on the base substrate. The orthographic projections of the second openings on the base substrate do not overlap with the orthographic projections of the touch signal lines or touch electrodes on the base substrate.

In some embodiments, the refractive index of the first touch insulating layer and the third touch insulating layer is greater than or equal to 1.4 and less than 1.6, while the refractive index of the second touch insulating layer and the fourth touch insulating layer is greater than or equal to 1.6 and less than or equal to 1.9.

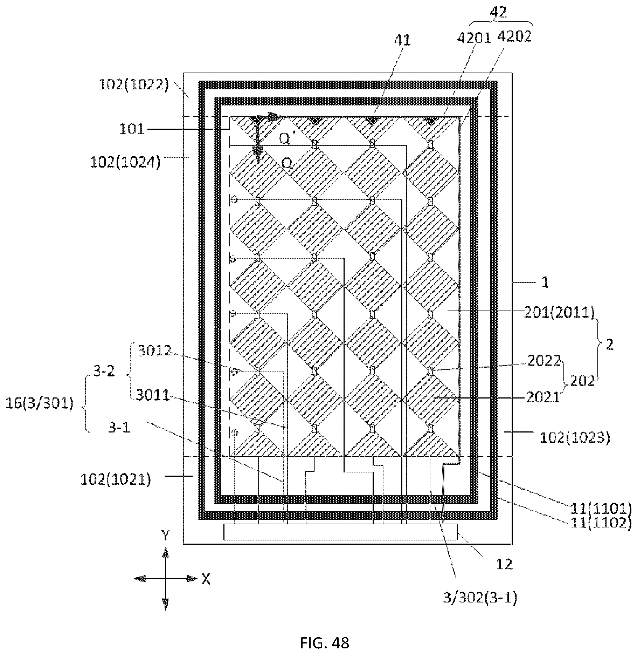

Embodiments of the disclosure provide a touch display panel, as shown in FIG. 48, which includes: a base substrate 1 and multiple touch conductive layers 4 at one side of the base substrate 1.

The base substrate includes a touch region 101 and a peripheral region 102 surrounding the touch region 101.

The multiple touch conductive layers 4 include multiple touch electrodes 2, multiple touch signal lines 3, multiple antenna electrodes 40, and an antenna signal line 41 electrically connected with multiple antenna electrodes 40. The touch electrodes 2 and antenna electrodes 40 are located in the touch region 101, with the antenna electrodes 40 located at the edge of the touch region 101.

In the touch display panel according to embodiments of the disclosure, antenna electrodes and antenna signal line are disposed in the touch conductive layer, meaning the antenna electrodes and antenna signal line are disposed in the same layer as the touch electrodes and/or touch signal lines, which can save process steps and costs. Additionally, the antenna electrodes are located in the touch region at the edge, which can reduce the impact of the antenna electrodes on touch functionality.

In some embodiments, as shown in FIG. 48, the peripheral region 102 includes a first peripheral region 1021 and a second peripheral region 1022 on both sides of the touch region 101 in the first direction Y, and a third peripheral region 1023 and a fourth peripheral region 1024 on both sides of the touch region 101 in the second direction X. In FIG. 2, the first portion 3-1 is located in the first peripheral region 1021, where the second direction X intersects with the first direction Y. In FIG. 2, the second direction X is perpendicular to the first direction Y. The first peripheral region 1021 includes a bonding region 12, which includes multiple bonding electrodes (not shown). The touch signal lines 3 include the first portion 3-1, with the bonding electrodes bonded to the first portion 3-1.

The antenna electrode 41 is located at the edge of the touch region 101 away from the first portion 3-1. The antenna signal line 41 includes a fifth portion 4101 in the peripheral region 102 and a sixth portion 4102 in the touch region 101.

The orthographic projections of the fifth portion 4101 and the sixth portion 4102 on the base substrate 1 overlap with the edge of the touch region 101.

In specific implementations, as shown in FIG. 48, the orthographic projection of the antenna electrode 40 on the base substrate 1 is near the edge of the touch region 101 close to the second peripheral region 1022. The fifth portion 4101 is electrically connected with multiple antenna electrodes 40, and the orthographic projection of the fifth portion 4101 on the base substrate 1 overlaps with the edge of the touch region 101 close to the second peripheral region 1022. The orthographic projection of the sixth portion 4102 on the base substrate 1 overlaps with the edge of the touch region 101 close to the third peripheral region 1023.

In the touch display panel according to embodiments of the disclosure, the orthographic projection of the antenna signal line on the base substrate does not overlap with the fourth peripheral region, second peripheral region, or third peripheral region, thereby eliminating the influence of the antenna signal line on the dimensions of these peripheral regions. This reduction in dimensions can achieve an ultra-narrow bezel effect.

In some embodiments, as shown in FIG. 48, the multiple touch electrodes 2 include:
multiple first touch electrodes 201, extending along the second direction X and arranged along the first direction Y, where the first touch electrode 201 includes multiple first sub-electrodes 2011 arranged along the second direction X;
multiple second touch electrodes 202, arranged along the second direction X and extending along the first direction Y, where the second touch electrodes 202 include multiple second sub-electrodes 2021 arranged along the first direction Y, and bridging electrodes 2022 that electrically connect adjacent second sub-electrodes 2021.

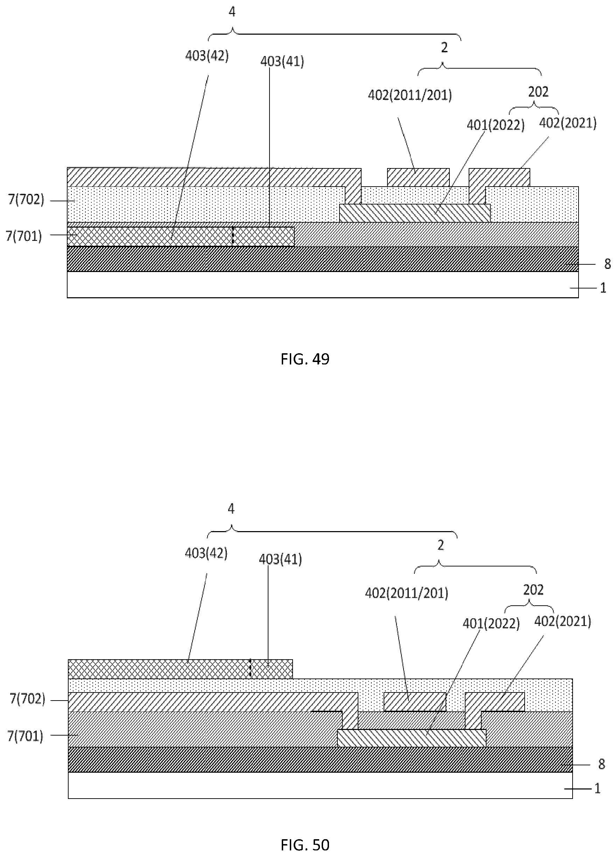

As shown in FIGS. 49 to 52, the multilayer touch conductive layer 4 includes the first touch conductive layer 401, the second touch conductive layer 402 and the third touch conductive layer 403.

The first touch conductive layer 401 includes the bridging electrodes 2022.

The second touch conductive layer 402 is disposed on the side of the first touch conductive layer 401 facing away from the base substrate 1. The second touch conductive layer 402 includes the first sub-electrodes 2011 and the second sub-electrodes 2021.

The third touch conductive layer 403 is located between the first touch conductive layer 401 and the base substrate 1, or disposed on the side of the second touch conductive layer 402 facing away from the base substrate 1. The third touch conductive layer 403 includes the antenna electrodes 40 and/or the antenna signal line 41.

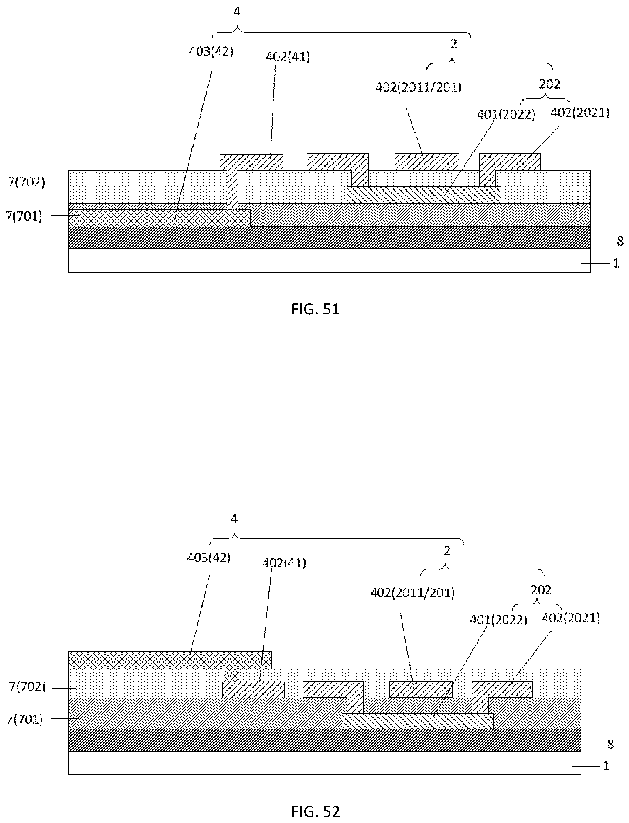

Specifically, FIGS. 49 to 52 are cross-sectional views along the line QQ' in FIG. 48. In FIGS. 49 and 51, the third touch conductive layer 403 is located between the first touch conductive layer 401 and the base substrate 1. In FIGS. 50 and 52, the third touch conductive layer 403 is disposed on the side of the second touch conductive layer 402 facing away from the base substrate 1.

In specific implementations, as shown in FIG. 48, the orthographic projection of the antenna electrodes 40 on the base substrate 1 is near the edge of the touch region 101 close to the second peripheral region 1022. The fifth portion 4101 is electrically connected with multiple antenna electrodes 40, and the orthographic projection of the fifth portion 4101 on the base substrate 1 overlaps with the edge of the touch region 101 close to the second peripheral region 1022. The orthographic projection of the sixth portion 4102 on the base substrate 1 overlaps with the edge of the touch region 101 close to the third peripheral region 1023.

In some embodiments, as shown in FIG. 48, the orthographic projection of one edge of the antenna electrode 40 on the base substrate 1 and the orthographic projection of one edge of the second sub-electrode 2021 on the base substrate 1 are located at the same straight line.

In some embodiments, as shown in FIGS. 49 to 52, the touch display panel further includes multiple touch insulating layers 7, with at least some of the touch insulating layers 7 located between adjacent touch conductive layers 4.

The multiple touch insulating layers 7 include the first touch insulating layer 701, and the second touch insulating layer 702 on the side of the first touch insulating layer 701 facing away from the base substrate 1. In FIGS. 49 and 51, the first touch insulating layer 701 is located between the first touch conductive layer 401 and the third touch conductive layer 403, and the second touch insulating layer 702 is located between the first touch conductive layer 401 and the second touch conductive layer 402. In FIGS. 50 and 52, the first touch insulating layer 701 is located between the first touch conductive layer 401 and the second touch conductive layer 402, and the second touch insulating layer 702 is located between the third touch conductive layer 403 and the second touch conductive layer 402.

In some embodiments, as shown in FIGS. 49 and 50, the antenna electrodes 40 and the antenna signal line 41 are disposed in the third touch conductive layer 403.

It should be noted that FIGS. 49 and 50 illustrate the example where the orthographic projection of the antenna electrodes 40 overlaps with the orthographic projection of the touch electrodes 2 on the base substrate 1. In specific implementations, to avoid electrical interference, the orthographic projections of the antenna electrodes and the touch electrodes on the base substrate may be set not to overlap.

Alternatively, in some embodiments, as shown in FIGS. 51 and 52, the antenna electrodes 40 are disposed in the second touch conductive layer 402, and the antenna signal line 41 is disposed in the third touch conductive layer 403.

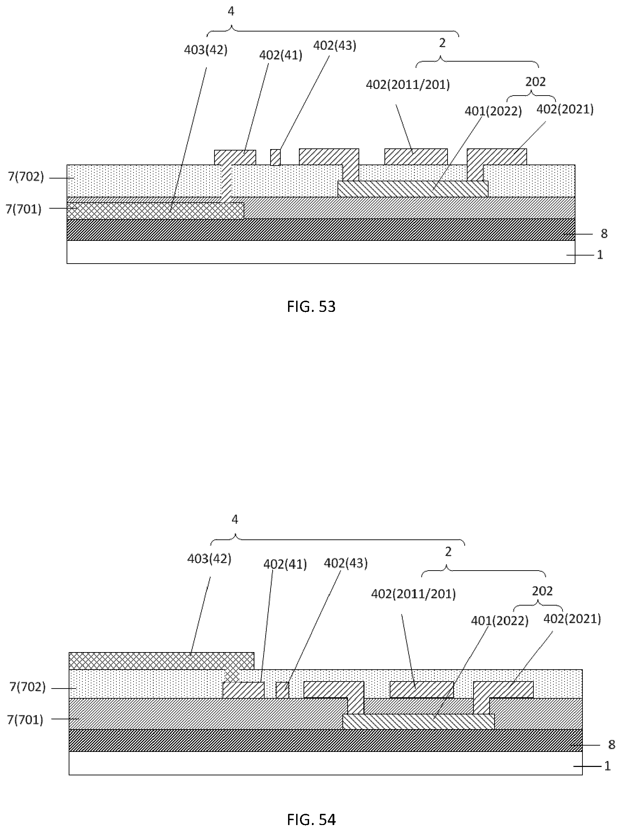

In some embodiments, as shown in FIGS. 53 and 54, the second touch conductive layer 402 further includes a fourth dummy electrode 43 between the touch electrode 2 and the antenna electrode 40.

In the touch display panel according to embodiments of the disclosure, arranging the fourth dummy electrode between the touch electrode and the antenna electrode can avoid interference when the antenna electrodes and touch electrodes are set in the same layer.

In some embodiments, as shown in FIGS. 51 and 53, the antenna signal line 41 is electrically connected with the antenna electrode 40 through via passing through the second touch insulating layer 702 and the first touch insulating layer 701. As shown in FIGS. 52 and 54, the antenna signal line 41 is electrically connected with the antenna electrode 40 through via passing through the second touch insulating layer 702.

It should be noted that FIG. 48 exemplifies the case where the touch signal lines 3 include first portions 3-1 on one side of the touch region 101 in the first direction Y, and at least some of the touch signal lines 3 include second portions 3-2 in the touch region 101 and electrically connected with the first portions 3-1. The touch conductive layer can further include connection electrodes electrically connected with the touch sub-electrodes. The touch insulating layer can further include light extraction structures. The arrangement of touch electrodes, touch signal lines, and touch insulating layers can follow the previously described embodiments and the arrangements shown in FIGS. 2 to 44, FIGS. 46, and FIG. 47, which will not be repeated here.

Alternatively, in some embodiments, the touch signal lines can be arranged as shown in FIG. 1, where the touch signal lines 3 are located in the peripheral region 102 and do not pass through the touch region 101.

In some embodiments, the orthographic projections of the antenna electrodes, antenna signal line, and fourth dummy electrode on the base substrate are mesh structures.

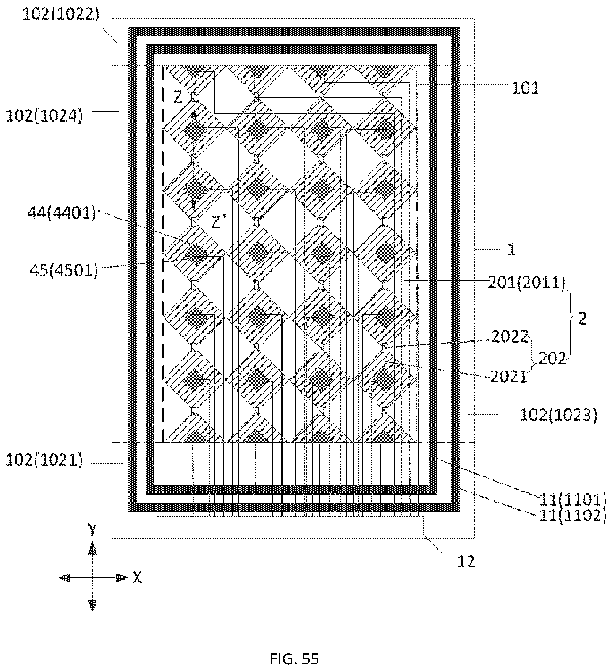

Embodiments of the disclosure provide a touch display panel, as shown in FIGS. 55 to 59, which includes a base substrate 1 and a touch layer 37.

The base substrate 1 includes a touch region 101 and a peripheral region 102 surrounding the touch region 101.

The touch Layer 37 is disposed on one side of the base substrate 1, and includes multiple touch conductive layers 4 and multiple touch insulating layers 7, with at least some of the touch insulating layers 7 located between adjacent layers of the touch conductive layers 4. The touch conductive layers 4 include multiple touch electrodes 2. The touch layer 37 further includes multiple pressure sensors 44 in the touch region 101, and multiple pressure-sensitive signal lines 45. The pressure sensor 44 includes the first electrode 4401, the second electrode 4402 disposed in a different layer from the first electrode 4401, and the pressure-sensitive layer 4403 between the first electrode 4401 and the second electrode 4402. The pressure-sensitive signal line 45 includes the first pressure-sensitive signal line 4501 electrically connected with the first electrode 4401, and the second pressure-sensitive signal line 4502 electrically connected with the second electrode 4402. The touch conductive layers 4 include the first electrode 4401, the second electrode 4402, and the pressure-sensitive signal line 45. The touch insulating layers 7 include the pressure-sensitive layer 4403.

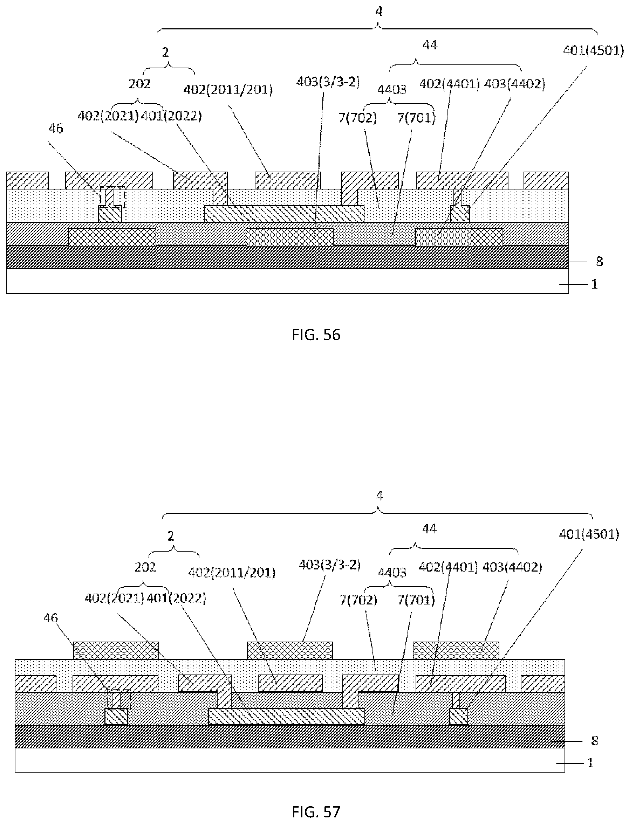

It should be noted that FIGS. 56 to 59 are cross-sectional views along the line ZZ' in FIG. 55.

The touch display panel according to embodiments of the disclosure further includes pressure sensors and pressure-sensitive signal lines, which can expand the application scenarios of the touch display panel. Additionally, the pressure sensors and pressure-sensitive signal lines are arranged in the touch layer, allowing the patterns of the pressure sensors and pressure-sensitive signal lines to be formed simultaneously with the pattern of the touch layer. This can save process steps and reduce costs.

In some embodiments, as shown in FIG. 55, the multiple touch electrodes 2 include:
multiple first touch electrodes 201, extending along the second direction X and arranged along the first direction Y, where the first touch electrode 201 includes multiple first sub-electrodes 2011 arranged along the second direction X;
multiple second touch electrodes 202, arranged along the second direction X and extending along the first direction Y, where the second touch electrode 202 includes multiple second sub-electrodes 2021 arranged along the first direction Y and bridging electrodes 2022 that electrically connect adjacent second sub-electrodes 2021.

In some embodiments, as shown in FIGS. 56 to 59, the multilayer touch conductive layer 4 includes the first touch conductive layer 401, the second touch conductive alyer 402 and the third touch conductive layer 403.

The first touch conductive layer 401 includes the bridging electrodes 2022.

The second touch conductive layer 402 is disposed on the side of the first touch conductive layer 401 facing away from the base substrate 1. The second touch conductive layer 402 includes the first sub-electrodes 2011 and the second sub-electrodes 2021.

The third touch conductive layer 403 is located between the first touch conductive layer 401 and the base substrate 1, or is disposed on the side of the second touch conductive layer 402 facing away from the base substrate 1. The third touch conductive layer 403 includes a part of the pressure sensor 44.

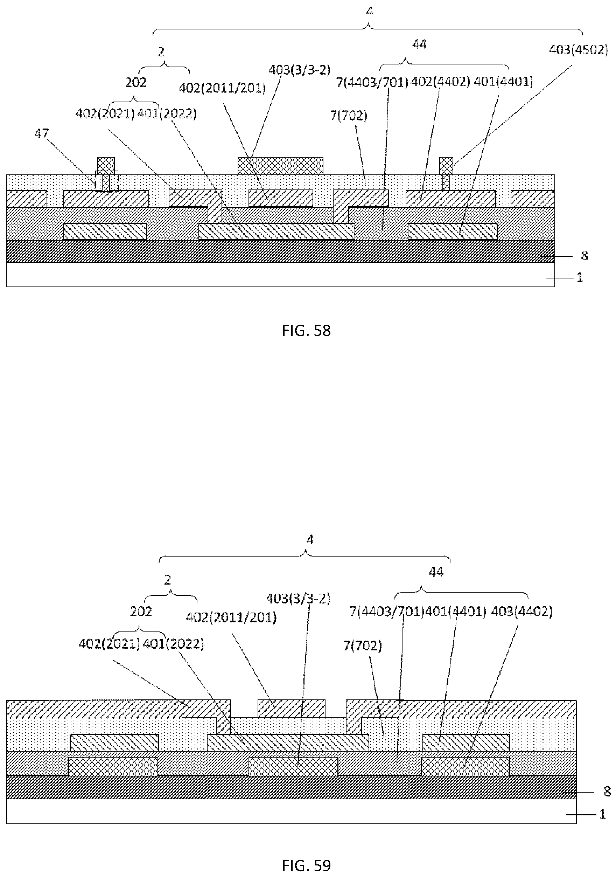

Specifically, in FIGS. 56 and 59, the third touch conductive layer 403 is located between the first touch conductive layer 401 and the base substrate 1. In FIGS. 57 and 58, the third touch conductive layer 403 is located on the side of the second touch conductive layer 402 facing away from the base substrate 1.

In some embodiments, as shown in FIGS. 56 to 59, the multilayer touch insulating layer 7 includes the first touch insulating layer 701 and the second touch insulating layer 702 on the side of the first touch insulating layer 701 facing away from the base substrate 1. In FIGS. 56 and 59, the first touch insulating layer 701 is located between the first touch conductive layer 401 and the third touch conductive layer 403, and the second touch insulating layer 702 is located between the first touch conductive layer 401 and the second touch conductive layer 402. In FIGS. 57 and 58, the first touch insulating layer 701 is located between the first touch conductive layer 401 and the second touch conductive layer 402, and the second touch insulating layer 702 is located between the third touch conductive layer 403 and the second touch conductive layer 402.

In some embodiments, as shown in FIGS. 56 to 59, at least two layers among the first touch conductive layer 401, the second touch conductive layer 402, and the third touch conductive layer 403 include the first electrode 4401, the second electrode 4402, and the pressure-sensitive signal lines 45.

In some embodiments, in the touch region, as shown in FIGS. 56 and 57, the first pressure-sensitive signal line 4501 is disposed in the first touch conductive layer 401, the first electrode 4401 is disposed in the second touch conductive layer 402, and the second electrode 4402 and the second pressure-sensitive signal line (not shown) are disposed in the third touch conductive layer 403.

The touch insulating layer 7 between the second touch conductive layer 402 and the third touch conductive layer 403 includes the pressure-sensitive layer 4403.

In the touch display panel according to embodiments of the disclosure, the second pressure-sensitive signal line and the second electrode are arranged in the same layer, allowing them to be directly electrically connected without via. This integration of pressure sensors with the touch layer reduces the design and manufacturing difficulty of pressure sensors and pressure-sensitive signal lines, streamlining the process and lowering costs.

Specifically, in FIG. 56, the second touch insulating layer 702 and the first touch insulating layer 701 include the pressure-sensitive layer 4403, and the first electrode 4401 is electrically connected with the first pressure-sensitive signal line 4501 through the via 46 passing through the second touch insulating layer 702. In FIG. 57, the second touch insulating layer 702 includes the pressure-sensitive layer 4403, and the first electrode 4401 is electrically connected with the first pressure-sensitive signal line 4501 through via 46 passing through the first touch insulating layer 701.

Alternatively, in some embodiments, in the touch region, as shown in FIG. 58, the first pressure-sensitive signal line (not shown) and the first electrode 4401 are disposed in the first touch conductive layer 401, the second electrode 4402 is disposed in the second touch conductive layer 402, and the second pressure-sensitive signal line 4502 is disposed in the third touch conductive layer 403.

The touch insulating layer 7 between the second touch conductive layer 402 and the first touch conductive layer 401 includes the pressure-sensitive layer 4403.

Specifically, in FIG. 58, the first touch insulating layer 701 includes the pressure-sensitive layer 4403, and the second pressure-sensitive signal line 4502 is electrically connected with the second electrode 4402 through the via 37 passing through the second touch insulating layer 702.

In the touch display panel according to embodiments of the disclosure, the first pressure-sensitive signal line and the first electrode are arranged in the same layer, allowing them to be directly electrically connected without vias. This integration of pressure sensors with the touch layer reduces the design and manufacturing difficulty of pressure sensors and pressure-sensitive signal lines, streamlining the process and lowering costs.

Alternatively, in some embodiments, in the touch region, as shown in FIG. 59 and FIG. 60, the first pressure-sensitive signal line (not shown) and the first electrode 4401 are disposed in the first touch conductive layer 401, and the second electrode 4402 and the second pressure-sensitive signal line (not shown) are disposed in the third touch conductive layer 403.

The touch insulating layer 7 between the third touch conductive layer 403 and the first touch conductive layer 401 includes the pressure-sensitive layer 4403.

In the touch display panel according to embodiments of the disclosure, the first pressure-sensitive signal line and the first electrode are arranged in the same layer, allowing them to be directly electrically connected without vias. The second pressure-sensitive signal line and the second electrode are arranged in the same layer, allowing them to be directly electrically connected without vias. This integration of pressure sensors with the touch layer reduces the design and manufacturing difficulty of pressure sensors and pressure-sensitive signal lines, streamlining the process and lowering costs.

In some embodiments, as shown in FIG. 55, centers of orthographic projections of at least some of the first electrodes 4401 and at least some of the second electrodes (not shown) on the base substrate 1 coincide with centers of orthographic projections of the first sub-electrodes 2011 or the second sub-electrodes 2021 on the base substrate 1. FIG. 55 exemplifies the case where the centers of the orthographic projections of the first electrodes 4401 and at least some of the second electrodes (not shown) coincide with the centers of the orthographic projections of the second sub-electrodes 2021 on the base substrate 1.

In some embodiments, as shown in FIG. 55, edges of orthographic projections of some first electrodes 4401 (triangular first electrode 4401 in FIG. 55) and edges of orthographic projections of at least some of the second electrodes (not shown) on the base substrate 1 are located at the the same straight line as the edges of the orthographic projections of the touch electrodes 2 on the base substrate 1.

In specific implementations, when the first electrode or the second electrode is arranged in the same layer as the sub-electrodes, some of the first electrodes and the second electrodes have their orthographic projections on the base substrate surrounded by the orthographic projections of the first sub-electrode or the second sub-electrode on the base substrate.

Alternatively, in some embodiments, the orthographic projections of the first electrode and the second electrode on the base substrate are located in the region between orthographic projections of adjacent touch electrodes on the base substrate. That is, the first electrode and the second electrode do not overlap with the touch electrodes, avoiding mutual interference between the touch electrodes and the pressure sensors.

In some embodiments, the multilayer touch conductive layer further includes multiple touch signal lines.

In some embodiments, the touch signal lines are arranged as shown in FIG. 1, with the touch signal lines 3 located in the peripheral region 102.

Alternatively, in some embodiments, the touch signal lines include a first portion on one side of the touch region in the first direction Y, and at least some of the touch signal lines further include second portions in the touch region 101 and electrically connected with the first portions. As shown in FIGS. 56 to 59, the third touch conductive layer 403 further includes the second portion 3-2.

In specific implementations, the touch conductive layer can also include connection electrodes electrically connected with the touch sub-electrodes. The touch insulating layer can further include a light extraction structure. The arrangement of the touch electrodes, touch signal lines, touch insulating layer, etc., can follow the arrangement in the previous embodiments and as shown in FIGS. 2 to 44, FIGS. 46, and FIG. 47, which will not be repeated here.

In specific implementations, the orthographic projections of the first electrode, second electrode, first pressure-sensitive signal line, and second pressure-sensitive signal line on the base substrate can be in mesh structures.

A display apparatus includes the touch display panel according to embodiments of the disclosure.

The display apparatus according to embodiments of the disclosure includes products or components with display functions, such as mobile phones, tablets, televisions, monitors, laptops, digital photo frames, and navigators. The other essential components of the display apparatus should be understood by those skilled in the art and will not be described in detail here, nor should they be considered as limitations of the disclosure. The implementation of the display apparatus can refer to the embodiments of the aforementioned touch display panel, and the repetitive parts will not be described again.

In summary, in the touch display panel and the display apparatus according to embodiments of the disclosure, the second portions, except the first portions, of some of the touch signal lines are arranged in the touch region instead of the peripheral region. This arrangement reduces the size of at least some of the peripheral regions, achieving an extremely narrow bezel effect. Additionally, since the second portion set in the touch region is in a different film layer than the touch electrodes, the interference with the touch electrodes can be reduced, which avoids affecting touch accuracy.

Although the preferred embodiments of the disclosure have been described, those skilled in the art will be able to make additional changes and modifications to these embodiments once the basic inventive concepts are apparent. Therefore, it is intended that the appended claims be construed to include the preferred embodiments and all changes and modifications that fall within the scope of the disclosure.

Obviously, those skilled in the art can make various changes and modifications to embodiments of the disclosures without departing from the spirit and scope of embodiments of the disclosures. In this way, if these modifications and variations of the embodiments of the disclosure fall within the scope of the claims of the disclosure and equivalent technologies, the disclosure is also intended to include these modifications and variations.

## Claims

1. A touch display panel, comprising:
a base substrate, comprising a touch region, and a peripheral region surrounding the touch region;
a plurality of touch electrodes, located in the touch region and disposed on one side of the base substrate; and
a plurality of touch signal lines disposed on the same one side of the base substrate as the plurality of touch electrodes, wherein the plurality of touch signal lines are electrically connected with the plurality of touch electrodes, the plurality of touch signal lines comprise first portions on one side of the touch region in a first direction, at least some of the plurality of touch signal lines comprise second portions in the touch region and electrically connected with the first portions, and the second portions and the plurality of touch electrodes are disposed in different layers;
wherein the touch display panel comprises a plurality of touch conductive layers, comprising:
a first touch conductive layer, comprising a part of the plurality of touch electrodes;
a second touch conductive layer on one side of the first touch conductive layer facing away from the base substrate, comprising remaining parts of the plurality of touch electrodes; and
a third touch conductive layer, located between the first touch conductive layer and the base substrate, or disposed on one side of the second touch conductive layer facing away from the base substrate; wherein the third touch conductive layer comprises the second portions.

2. The display panel according to claim 1, wherein
the plurality of touch electrodes comprise:
a plurality of first touch electrodes extending along a second direction and arranged along the first direction, wherein the first touch electrode comprises a plurality of first sub-electrodes arranged along the second direction, and the second direction intersects the first direction; and
a plurality of second touch electrodes arranged along the second direction and extending along the first direction, wherein the second touch electrode comprises a plurality of second sub-electrodes arranged along the first direction and bridging electrodes for connecting adjacent two of the plurality of second sub-electrodes;
wherein the first touch conductive layer comprises the bridging electrodes, and the second touch conductive layer comprises the plurality of the first sub-electrodes and the plurality of second sub-electrodes;
wherein the plurality of touch signal lines comprises:
a plurality of first touch signal lines, wherein the first touch electrode is electrically connected with at least one first touch signal line, and the plurality of first touch signal lines comprises the second portions; and
a plurality of second touch signal lines, wherein the second touch electrode is electrically connected with at least one second touch signal line.

3. The touch display panel according to claim 1 or 2, wherein the second portions of the plurality of first touch signal line comprise first sub-portions extending along the first direction and electrically connected with the first portions;
at least some of the second portions of the plurality of first touch signal lines comprise second sub-portions extending along a second direction and electrically connected with the first sub-portions and the touch electrodes;
an orthographic projection of the second sub-portion on the base substrate overlaps with an orthographic projection of the first touch electrode on the base substrate and an orthographic projection of the bridging electrode on the base substrate, and the orthographic projection of the second sub-portion on the base substrate does not overlap with an orthographic projection of the second sub-electrode on the base substrate.

4. The touch display panel according to claim 3, wherein an orthographic projection of the first sub-portion on the base substrate overlaps with an orthographic projection of the first sub-electrode on the base substrate, and the orthographic projection of the first sub-portion on the base substrate does not overlap with an orthographic projection of the second touch electrode on the base substrate;
the orthographic projection of the first sub-portion on the base substrate is within a region between orthographic projections of adjacent two of plurality of second touch electrodes on the base substrate.

5. The touch display panel according to claim 3, wherein an orthographic projection of the first sub-portion on the base substrate overlaps with an orthographic projection of the first sub-electrode on the base substrate;
orthographic projections of at least some of the first sub-portions on the base substrate overlap with the orthographic projections of the second sub-electrodes on the base substrate;
a total area of an overlapping region between the orthographic projection of the first sub-portion on the base substrate and the orthographic projection of the second sub-electrode on the base substrate is indicated as S1, an area of an orthographic projection of the first touch signal line on the base substrate is indicated as S2, and S1/S2 ≤ 10%;
and/or, a total length, along the first direction, of the overlapping region between the orthographic projection of the first sub-portion on the base substrate and the orthographic projection of the second sub-electrode on the base substrate is indicated as L1, a length of the orthographic projection of the first touch signal line on the base substrate is indicated as L2, and L1/L2 ≤ 10%.

6. The touch display panel according to any one of claims 3 - 5, wherein the second touch conductive layer further comprises a plurality of first dummy electrodes, and the plurality of first dummy electrodes are insulated from the plurality of touch electrodes;
the first dummy electrode is located between first sub-electrodes of two different first touch electrodes that are adjacent, and the first dummy electrode is located between second sub-electrodes of two different second touch electrodes that are adjacent;
orthographic projections of at least some of the first sub-portions on the base substrate overlap with orthographic projections of the first dummy electrodes on the base substrate.

7. The touch display panel according to any one of claims 3 - 6, wherein at least some of the second portions of the plurality of first touch signal lines comprise first width regions and second width regions arranged alternately;
an orthographic projection of the first width region on the base substrate is within an orthographic projection of the first sub-electrode on the base substrate;
an orthographic projection of at least some of the second width regions overlaps with the orthographic projection of the bridging electrode on the base substrate;
the orthographic projection of at least some of the second width regions is within an orthographic projection of a region between two adjacent second sub-electrodes on the base substrate, or the orthographic projection of at least some of the second width regions overlaps with the orthographic projection of the second sub-electrode on the base substrate;
a width of the first width region along a direction perpendicular to an extending direction of the first width region is larger than a width of the second width region along a direction perpendicular to an extending direction of the second width region.

8. The touch display panel according to claim 7, wherein in the first sub-portion, the orthographic projection of the first width region on the base substrate is within the orthographic projection of the first sub-electrode on the base substrate; and the orthographic projection of the second width region on the base substrate is within the orthographic projection of the region between two adjacent second sub-electrodes on the base substrate, or the orthographic projection of the second width region on the base substrate overlaps with the orthographic projection of the second sub-electrode on the base substrate;
in the second sub-portion, the orthographic projection of the first width region on the base substrate is within the orthographic projection of the first sub-electrode on the base substrate, and the orthographic projection of the second width region on the base substrate overlaps with the orthographic projection of the bridging electrode on the base substrate.

9. The touch display panel according to claim 8, wherein in the touch region, a pattern of an orthographic projection of the touch signal line on the base substrate comprises a plurality of grids;
a quantity of grids comprised in the second width region along the direction perpendicular to the extending direction of the second width region is less than a quantity of grids comprised in the first width region along the direction perpendicular to the extending direction of the first width region.

10. The touch display panel according to claim 8, wherein a pattern of the second width region is a line.

11. The touch display panel according to any one of claims 3 - 10, wherein an end of the second sub-portion far away from the first sub-portion is electrically connected with an end of the first touch electrode.

12. The touch display panel according to any one of claims 3 - 11, wherein the plurality of the first touch signal lines are divided into n first touch signal line groups, wherein n is a positive integer;
first touch signal lines in the first touch signal line group correspond one-to-one with the first touch electrodes;
in each first touch signal line group, first sub-portions of multiple first touch signal lines are arranged along the second direction, and second sub-portions of the multiple first touch signal lines are arranged along the first direction.

13. The touch display panel according to claim 12, wherein in a direction from the second sub-portion to the first sub-portion, lengths, in the first direction, of the first sub-portions in the first touch signal line group increase gradually;
in a direction with an increasing distance from the first portion in the touch region, lengths, in the second direction, of the second sub-portions in the first touch signal line group increase gradually.

14. The touch display panel according to claim 12 or 13, wherein except for a second portion that is electrically connected with a first touch electrode farthest from the first portion, at least one of a first sub-portion or a second sub-portion of a remaining second portion comprises a first compensation portion;
the first compensation portion extends in a zigzag pattern;
in two first touch signal lines of the first touch signal line group, a quantity of first compensation portions comprised in a first touch signal line electrically connected with a first touch electrode closer to the first portion is greater than a quantity of first compensation portions comprised in a first touch signal line electrically connected with a first touch electrode farther from the first portion;
in two first touch signal lines of the first touch signal line group, a total length of the first compensation portions comprised in the first touch signal line electrically connected with the first touch electrode closer to the first portion is greater than a total length of the first compensation portions comprised in the first touch signal line electrically connected with the first touch electrode farther from the first portion;
an orthographic projection of the first compensation portion on the base substrate is within an orthographic projection of the first sub-electrode on the base substrate.

15. The touch display panel according to claim 12 or 13, wherein in a direction with an increasing distance from the first portion in the touch region, line widths, in a direction perpendicular to an extending direction of the second portions, of the second portions in the first touch signal line group gradually increase.

16. The touch display panel according to claim 12 or 13, wherein at least some of the second portions of the plurality of first touch signal lines comprise at least one second compensation portion;
a width of the second compensation portion in a direction perpendicular to an extending direction of the second compensation portion is larger than a width of a remaining region of the second portion in a direction perpendicular to an extending direction of the remaining region;
in two first touch signal lines of the first touch signal line group, a quantity of second compensation portions comprised in a first touch signal line electrically connected with a first touch electrode closer to the first portion is less than a quantity of second compensation portions comprised in a first touch signal line electrically connected with a first touch electrode farther from the first portion;
an orthographic projection of the second compensation portion on the base substrate is within an orthographic projection of the first sub-electrode on the base substrate.

17. The touch display panel according to claim 16, wherein widths of the second compensation portions in different first touch signal lines in the direction perpendicular to the extending direction of the second compensation portions are the same.

18. The touch display panel according to claim 16, wherein in the two first touch signal lines of the first touch signal line group, a width of a second compensation portion in the first touch signal line electrically connected with the first touch electrode closer to the first portion in the direction perpendicular to the extending direction of the second compensation portion is smaller than a width of a second compensation portion in the first touch signal line electrically connected with the first touch electrode farther from the first portion in the direction perpendicular to the extending direction of the second compensation portion.

19. The touch display panel according to any one of claims 3 - 18, wherein the plurality of second touch signal lines are electrically connected one-to-one with the plurality of second touch electrodes, and the plurality of second touch signal lines comprise only the first portions.

20. The touch display panel according to any one of claims 3 - 18, wherein the plurality of second touch signal lines comprises a plurality of first type second touch signal lines and a plurality of second type second touch signal lines;
the plurality of first type second touch signal lines comprise only the first portions, and the plurality of first type second touch signal lines are electrically connected one-to-one with the plurality of second touch electrodes;
the plurality of second type second touch signal lines comprise the first portions and the second portions, and the plurality of second type second touch signal lines are electrically connected one-to-one with the plurality of second touch electrodes; and the second portions of the plurality of second type second touch signal lines are electrically connected with second sub-electrodes, farthest from the first portions, of the plurality of second touch electrodes.

21. The touch display panel according to claim 20, wherein the plurality of first touch signal lines are divided into two first touch signal line groups, and the plurality of second type second touch signal lines are located between the two first touch signal line groups.

22. The touch display panel according to claim 20 or 21, wherein the second portions of the plurality of second type second touch signal lines comprise third sub-portions extending along the first direction and electrically connected with the first portions;
at least some of the second portions of the plurality of second type second touch signal lines further comprise fourth sub-portions extending along the second direction and electrically connected with the third sub-portions and the second touch electrodes;
an orthographic projection of the fourth sub-portion on the base substrate overlaps with orthographic projections of the second sub-electrode and the first sub-electrode on the base substrate;
an orthographic projection of the third sub-portion on the base substrate overlaps with the orthographic projections of the second sub-electrode and the bridging electrode on the base substrate, and the orthographic projection of the third sub-portion on the base substrate does not overlap with an orthographic projection of the second touch electrode on the base substrate.

23. The touch display panel according to claim 22, wherein a total area of an overlapping region between an orthographic projection of the second portion of the second type second touch signal line on the base substrate and the orthographic projection of the first touch electrode on the base substrate is indicated as S3, an area of the orthographic projection of the second portion of the second type second touch signal line on the base substrate is indicated as S4, and S3/S4 ≤ 10%; and/or,
a length, in the first direction, of the overlapping region between the orthographic projection of the second portion of the second type second touch signal line on the base substrate and the orthographic projection of the first touch electrode on the base substrate is indicated as L3, a length of the orthographic projection of the second portion of the second type second touch signal line on the base substrate is indicated as L4, and L3/L4 ≤ 10%.

24. The touch display panel according to claim 22 or 23, wherein at least some of the second portions of the plurality of second type second touch signal lines comprise third width regions and fourth width regions arranged alternately;
an orthographic projection of the third width region on the base substrate overlaps with the orthographic projection of the first sub-electrode on the base substrate, the orthographic projection of the third width region on the base substrate does not overlap with the orthographic projection of the second sub-electrode on the base substrate, and an orthographic projection of the fourth width region on the base substrate overlaps with the orthographic projection of the second sub-electrode on the base substrate;
a width of the third width region in a direction perpendicular to an extending direction of the third width region is greater than a width of the fourth width region in a direction perpendicular to an extending direction of the fourth width region;
in the touch region, a pattern of an orthographic projection of the touch signal line on the base substrate comprises a plurality of grids, and a quantity of grids comprised in the fourth width region in the direction perpendicular to the extending direction of the fourth width region is less than a quantity of grids comprised in the third width region in the direction perpendicular to the extending direction of the third width region; or
a pattern of the orthographic projection of the third width region on the base substrate comprises a plurality of grids, and a pattern of the orthographic projection of the fourth width region on the base substrate is a line.

25. The touch display panel according to any one of claims 20 - 24, wherein the third touch conductive layer further comprises a first shielding signal line between the second portion of the first touch signal line and the second portion of the second type second touch signal line;
the first shielding signal line comprises a third portion extending from the touch region to the peripheral region in the first direction, and a fourth portion extending in the second direction and electrically connected with the third portion;
in the second direction, the third portion is located between the first sub-portion and the third sub-portion; and in the first direction, the fourth portion is located between the second sub-portion and the fourth sub-portion.

26. The touch display panel according to any one of claims 1 - 25, wherein the third touch conductive layer further comprises a plurality of second dummy electrodes;
the plurality second dummy electrodes are spaced apart from and insulated from the second portions.

27. The touch display panel according to any one of claims 1 - 26, wherein the third touch conductive layer is disposed between the base substrate and the first touch conductive layer, and the first touch conductive layer further comprises a plurality of first connection electrodes electrically connected with the second portions;
an orthographic projection of the first connection electrode on the base substrate overlaps with an orthographic projection of a first sub-electrode on the base substrate, and the orthographic projection of the first connection electrode on the base substrate does not overlap with an orthographic projection of a second sub-electrode on the base substrate; or
an orthographic projection of some of the first connection electrodes on the base substrate is within the orthographic projection of the first sub-electrode on the base substrate; and an orthographic projection of some of the first connections electrodes on the base substrate overlaps with both the orthographic projections of the first sub-electrode and the second sub-electrode on the base substrate.

28. The touch display panel according to claim 27, wherein the first touch conductive layer further comprises a third dummy electrode between the first connection electrode and the bridging electrode.

29. The touch display panel according to any one of claims 1 - 25 and 27 - 28, wherein the third touch conductive layer further comprises a plurality of second connection electrodes and a plurality of third connection electrodes;
the second connection electrode is electrically connected with the first touch electrode, and the third connection electrode is electrically connected with the second touch electrode.

30. The touch display panel according to any one of claims 1 - 26 and 29, further comprising a plurality of touch insulating layers;
wherein at least some of the plurality of touch insulating layers are disposed between adjacent two of the plurality of touch conductive layers;
the third touch conductive layer is disposed at one side of the second touch conductive layer facing away from the base substrate, and a thickness of a touch insulating layer between the third touch conductive layer and the second touch conductive layer is larger than a thickness of a touch insulating layer between the first touch conductive layer and the second touch conductive layer.

31. The touch display panel according to any one of claims 1 - 30, wherein the first portion comprises a plurality of layers of sub-signal lines arranged in a stack;
the plurality of layers of sub-signal lines comprise a first sub-signal line, a second sub-signal line and a third sub-signal line sequentially disposed on one side of the base substrate;
the first sub-signal line, the second sub-signal line, and the third sub-signal line are respectively disposed in three touch conductive layers.

32. The touch display panel according to claim 31, wherein at least some of the first portions comprise fifth sub-portions extending in a second direction and sixth sub-portions extending in the first direction;
the touch display panel further comprises a first touch insulating layer between the first sub-signal line and the second sub-signal line, and a second touch insulating layer between the second sub-signal line and the third sub-signal line;
at least some region of the sixth sub-portion comprises the first sub-signal line, the second sub-signal line and the third sub-signal line; and in the sixth sub-portion, the second sub-signal line is electrically connected with the first sub-signal line through a first via passing through the first touch insulating layer, and the third sub-signal line is electrically connected with the second sub-signal line through a second via passing through the second touch insulating layer;
an orthographic projection of the first via on the base substrate does not overlap with an orthographic projection of the second via on the base substrate.

33. The touch display panel according to claim 32, wherein the fifth sub-portion comprises one of the first sub-signal line, the second sub-signal line or the third sub-signal line;
orthographic projections of fifth sub-portions in different layers on the base substrate overlap with each other.

34. The touch display panel according to any one of claims 1 - 33, further comprising a dam in the peripheral region;
wherein an orthographic projection of the first portion on the base substrate overlaps with an orthographic projection of the dam on the base substrate, and in an overlapping region between the orthographic projection of the first portion on the base substrate and the orthographic projection of the dam on the base substrate, the first portion comprises one layer or two layers of sub-signal lines.

35. The touch display panel according to any one of claims 1 - 34, wherein the peripheral region comprises a first peripheral region at one side of the touch region along the first direction, and the first portions are located in the first peripheral region;
the first peripheral region comprises a bending region extending along a second direction;
an orthographic projection of the first portions on the base substrate overlaps with the bending region, and in the bending region, the first portion comprises one layer of sub-signal lines;
a plurality of layers of sub-signal lines further comprise a fourth sub-signal line between a first sub-signal line and the base substrate;
an orthographic projection of the fourth sub-signal line on the base substrate passes through the bending region, and orthographic projections of the first sub-signal line, a second sub-signal line and a third sub-signal line on the base substrate do not overlap with the bending region;
in a region except the bending region, the fourth sub-signal line is electrically connected with one of the first sub-signal line, the second sub-signal line or the third sub-signal line.

36. The touch display panel according to any one of claims 1 - 35, further comprising a plurality of light-emitting units located in the touch region and disposed between the base substrate and the plurality of touch conductive layers;
wherein in the touch region, patterns of orthographic projections of the first touch conductive layer, the second touch conductive layer and the third touch conductive layer on the base substrate comprise a plurality of grids; and each grid corresponds to at least one light-emitting unit, and an orthographic projection of a light-emitting region of the light-emitting unit on the base substrate is within an orthographic projection of the grid on the base substrate.

37. The touch display panel according to claim 36, further comprising a plurality of light extraction structures,
wherein the light extraction structure comprises a first sub-structure and a second sub-structure on one side of the first sub-structure facing away from the base substrate;
the first sub-structure comprises an opening, and an orthographic projection of the opening on the base substrate covers the orthographic projection of the light-emitting region on the base substrate;
at the opening, the first sub-structure comprises an inclined sidewall, and the second sub-structure covers the opening and the inclined sidewall;
a refractive index of the first sub-structure is less than a refractive index of the second sub-structure;
the touch display panel further comprises a plurality of touch insulating layers; some of the plurality of touch insulating layers are disposed between adjacent two of the plurality of touch conductive layers; and some of the plurality of touch insulating layers are disposed on one side, facing away from the base substrate, of a touch conductive layer farthest from the base substrate, and/or some of the plurality of touch insulating layers are disposed between a touch conductive layer closest to the base substrate and the base substrate;
among the plurality of touch insulating layers, at least one touch insulating layer comprises the first sub-structure, and a touch insulating layer adjacent to the at least one touch insulating layer and disposed on one side of the at least one touch insulating layer facing away from the base substrate comprises the second sub-structure.

38. The touch display panel according to claim 37, wherein the plurality of touch insulating layers comprise a first touch insulating layer, a second touch insulating layer, a third touch insulating layer and a fourth touch insulating layer;
the third touch insulating layer is disposed on the side, facing away from the base substrate, of the touch conductive layer farthest from the base substrate, and the fourth touch conductive layer is disposed on one side of the third touch insulating layer facing away from the base substrate;
the first touch conductive layer comprises a plurality of first openings in the touch region, an orthographic projection of the first opening on the base substrate covers the orthographic projection of the light-emitting region on the base substrate, and the orthographic projection of the first opening on the base substrate does not overlap with orthographic projections of the touch signal line and the touch electrode on the base substrate;
at the first opening, the first touch insulating layer comprises a first inclined sidewall, and the second touch insulating layer covers the first inclined sidewall and the first opening;
a refractive index of the second touch insulating layer is larger than a refractive index of the first touch insulating layer;
the third touch insulating layer comprises a plurality of second openings in the touch region, an orthographic projection of the second opening on the base substrate covers the orthographic projection of the light-emitting region on the base substrate, and the orthographic projection of the second opening on the base substrate does not overlap with the orthographic projections of the touch signal line and the touch electrode on the base substrate;
at the second opening, the third touch insulating layer comprises a second inclined sidewall, and the fourth touch insulating layer covers the second inclined sidewall and the second opening;
a refractive index of the fourth touch insulating layer is larger than a refractive index of the third touch insulating layer.

39. The touch display panel according to any one of claims 1 - 38, further comprising: a plurality of antenna electrodes in the touch region, and an antenna signal line electrically connected with the plurality of antenna electrodes;
wherein
the plurality of antenna electrodes are located at an edge, far away from the first portions, of the touch region;
the antenna signal line comprises a fifth portion in the peripheral region and a sixth portion in the touch region;
an orthographic projection of the sixth portion on the base substrate overlaps with an edge of the touch region;
the plurality of antenna electrodes and the antenna signal line are disposed in the third touch conductive layer;
the plurality of antenna electrodes are disposed in the second touch conductive layer, and the antenna signal line is disposed in the third touch conductive layer;
the second touch conductive layer further comprises a fourth dummy electrode between the touch electrode and the antenna electrode.

40. The touch display panel according to any one of claims 1 - 39, further comprising: a plurality of pressure sensors in the touch region, and a plurality of pressure-sensitive signal lines;
wherein the pressure sensor comprises a first electrode, a second electrode in a different layer from the first electrode, and a pressure-sensitive layer between the first electrode and the second electrode;
the pressure-sensitive signal line comprises a first pressure-sensitive signal line electrically connected with the first electrode, and a second pressure-sensitive signal line electrically connected with the second electrode;
at least two of the first touch conductive layer, the second touch conductive layer or the third touch conductive layer comprise the first electrode, the second electrode and the pressure-sensitive signal line.

41. The touch display panel according to claim 40, further comprising a plurality of touch insulating layers;
wherein at least some of the plurality of touch insulating layers are located between adjacent two of the plurality of touch conductive layers;
in the touch region, the first pressure-sensitive signal line is disposed in the first touch conductive layer, the first electrode is disposed in the second touch conductive layer, and the second electrode and the second pressure-sensitive signal line are disposed in the third touch conductive layer; and a touch insulating layer between the second touch conductive layer and the third touch conductive layer comprises the pressure-sensitive layer; or
in the touch region, the first pressure-sensitive signal line and the first electrode are disposed in the first touch conductive layer, the second electrode is disposed in the second touch conductive layer, and the second pressure-sensitive signal line is disposed in the third touch conductive layer; and a touch insulating layer between the second touch conductive layer and the first touch conductive layer comprises the pressure-sensitive layer; or
in the touch region, the first pressure-sensitive signal line and the first electrode are disposed in the first touch conductive layer, and the second electrode and the second pressure-sensitive signal line are disposed in the third touch conductive layer; and a touch insulating layer between the third touch conductive layer and the first touch conductive layer comprises the pressure-sensitive layer.

42. The touch display panel according to claim 40 or 41, wherein centers of orthographic projections of at least some of the first electrodes and at least some of the second electrodes on the base substrate coincide with centers of orthographic projections of first sub-electrodes or second sub-electrodes on the base substrate; or
orthographic projections of the first electrode and the second electrode are within an orthographic projection of a region between adjacent touch electrodes on the base substrate.

43. A display apparatus, comprising the touch display panel according to any one of claims 1 - 42.
